# EUROPEAN PATENT APPLICATION

(11) **EP 4 411 901 A1**
(43) Date of publication of application: **07.08.2024**
(21) Application number: 22876580.6
(22) Date of filing: 30.09.2022
(51) Int. Cl.: H01M 8/00, H01M 8/04, H01M 8/04007, H01M 8/04014, H01M 8/0432, H01M 8/0438, H01M 8/04701, H01M 8/04746, H01M 8/04858, H01M 8/0606, H01M 8/10, H01M 8/12, F24H 1/00

(54) **COGENERATION SYSTEM**

(30) Priority: 30.09.2021 JP 2021162076; 30.09.2021 JP 2021162310; 31.03.2022 JP 2022061336
(71) Applicant: Kyocera Corporation, Kyoto-shi Kyoto 612-8501 (JP)
(72) Inventor: KAWAGUCHI, Yutaka, Kyoto-shi, Kyoto 612-8501 (JP)
(74) Representative: TBK
(86) International application number: PCT/JP2022/036856
(87) International publication number: WO 2023/054718

(57) **Abstract**

A cogeneration system has a fuel cell, a fuel cell system, and an indirect supply line. The fuel cell system has a first heat exchange unit, a heat storage tank, and a waste heat recovery line. The first heat exchange unit is positioned close to an outer side of the fuel cell or inside thereof and causes a heat medium to recover heat generated at the fuel cell. The heat storage tank stores the heat medium and provides heat in response to a hot-water supply demand. The waste heat recovery line causes the heat medium to circulate between the fuel cell and the heat storage tank. The indirect supply line includes a second heat exchange unit that supplies heat by causing the heat medium stored in the heat storage tank and a medium to exchange heat with each other.

## Description

### TECHNICAL FIELD

The present disclosure relates to cogeneration systems.

### BACKGROUND OF INVENTION

A known household cogeneration system generates electric power by using a fuel cell, and also recovers heat discharged from the fuel cell and heats and supplies city water by using the recovered heat (see Patent Literature 1).

### CITATION LIST

### PATENT LITERATURE

Patent Literature 1: Japanese Unexamined Patent Application Publication No. 2002-298863

### SUMMARY

### PROBLEM TO BE SOLVED

In the cogeneration system using the fuel cell, it is difficult with the recovered heat alone to add demanded heat to hot water to be supplied.

Therefore, in view of the problem in the related art described above, an object of the present disclosure is to provide a cogeneration system capable of adding demanded heat to a large amount of medium.

### SOLUTION TO PROBLEM

(1) In an embodiment, a cogeneration system includes a fuel cell system and an indirect supply line. The fuel cell system has a fuel cell, a first heat exchange unit, a heat storage tank, and a waste heat recovery line. The first heat exchange unit is positioned close to an outer side of the fuel cell or inside thereof and causes a heat medium to recover heat generated at the fuel cell. The heat storage tank stores the heat medium and provides heat in response to a hot-water supply demand. The waste heat recovery line causes the heat medium to circulate between the fuel cell and the heat storage tank. The indirect supply line includes a second heat exchange unit that supplies heat by causing the heat medium stored in the heat medium tank and a medium to exchange heat with each other.
(2) In the cogeneration system according to (1) described above, the fuel cell system has a third heat exchange unit that causes exhaust gas of the fuel cell and the heat medium circulating along the waste heat recovery line to exchange heat with each other.
(3) In the cogeneration system according to (2) described above, the third heat exchange unit is positioned upstream of the first heat exchange unit in the waste heat recovery line.
(4) In the cogeneration system according to (2) or (3) described above, the fuel cell system has a heat radiation unit between the heat storage tank and the third heat exchange unit in the waste heat recovery line.
(5) In the cogeneration system according to any one of (2) to (4) described above, the fuel cell system has a temperature adjuster positioned between the first heat exchange unit and the third heat exchange unit in the waste heat recovery line and capable of heating or cooling the heat medium circulating along the waste heat recovery line.
(6) In the cogeneration system according to (5) described above, the temperature adjuster includes a burner.
(7) In the cogeneration system according to (5) or (6) described above, the waste heat recovery line includes a first flow path downstream of the third heat exchange unit. The first flow path bypasses the temperature adjuster and connects to the first heat exchange unit.
(8) In the cogeneration system according to any one of (2) to (7) described above, the waste heat recovery line includes second and third flow paths downstream of the heat storage tank. The second flow path bypasses the third heat exchange unit and connects to the first heat exchange unit. The third flow path branches off from the second flow path and connects to the third heat exchange unit.
(9) The cogeneration system according to any one of (1) to (8) described above further includes a direct supply line that supplies heat by causing the heat medium stored in the heat storage tank to flow.
(10) The cogeneration system according to any one of (2) to (9) described above further includes a control device. The waste heat recovery line includes a heat-medium outflow line that causes the heat medium to flow out from the heat storage tank, an exhaust-gas heat-exchange line provided with the third heat exchange unit, a heat-medium cooling line that cools the heat medium, a heat-medium heating line that heats the heat medium, and a heat-medium inflow line capable of causing the heat medium to recover the heat generated at the fuel cell and causing the heat medium to flow into the heat storage tank. The waste heat recovery line is capable of switching a passage of the heat medium to any one of the exhaust-gas heat-exchange line, the heat-medium cooling line, and the heat-medium heating line between the heat-medium outflow line and the heat-medium inflow line or is capable of changing a sequence in which the heat medium travels along at least two of the exhaust-gas heat-exchange line, the heat-medium cooling line, and the heat-medium heating line. The control device switches a travel path of the heat medium in the waste heat recovery line in accordance with an operational state of the fuel cell and whether the hot-water supply demand is present or absent.
(11) In the cogeneration system according to (10) described above, the exhaust-gas heat-exchange line includes a third heat exchange unit that causes exhaust gas of the fuel cell and the heat medium to exchange heat with each other, and the cogeneration system further includes a condensed water tank storing condensed water occurring at the third heat exchange unit.
(12) In the cogeneration system according to (10) or (11) described above, when the fuel cell is in operation, the control device switches the travel path of the heat medium in the waste heat recovery line in accordance with a relationship between a temperature at a lower part of the heat storage tank and a temperature threshold value, and a first temperature threshold value serving as the temperature threshold value when the hot-water supply demand is absent is lower than a second temperature threshold value serving as the temperature threshold value when the hot-water supply demand is present.
(13) In the cogeneration system according to (12) described above, when the hot-water supply demand is absent and the temperature at the lower part of the heat storage tank is equal to or lower than the first temperature threshold value, the control device switches the waste heat recovery line such that the heat medium travels along the exhaust-gas heat-exchange line alone.
(14) In the cogeneration system according to (12) described above, when the hot-water supply demand is absent and the temperature at the lower part of the heat storage tank is higher than the first temperature threshold value, the control device switches the waste heat recovery line such that the heat medium travels sequentially along the heat-medium cooling line and the exhaust-gas heat-exchange line.
(15) In the cogeneration system according to any one of (10) to (14) described above, when the fuel cell is in operation and the hot-water supply demand is present, the control device switches the travel path of the heat medium in the waste heat recovery line based on an inflow heat amount and a provided heat amount. The inflow heat amount is an amount of heat of the heat medium flowing into the heat storage tank. The provided heat amount is an amount of heat provided by the heat storage tank in response to the hot-water supply demand.
(16) In the cogeneration system according to (15) described above, when a temperature at a lower part of the heat storage tank is equal to or lower than a third temperature threshold value and the inflow heat amount is smaller than the provided heat amount, the control device switches the waste heat recovery line such that the heat medium travels along the heat-medium heating line.
(17) In the cogeneration system according to (15) described above, when a temperature at a lower part of the heat storage tank is equal to or lower than a fourth temperature threshold value and the inflow heat amount is larger than the provided heat amount or when the temperature at the lower part of the heat storage tank is higher than the fourth temperature threshold value and the inflow heat amount is smaller than the provided heat amount, the control device switches the waste heat recovery line such that the heat medium travels along the exhaust-gas heat-exchange line alone.
(18) The cogeneration system according to (17) described above further includes a condensed water tank storing condensed water occurring at the third heat exchange unit. When the temperature at the lower part of the heat storage tank is higher than a fifth temperature threshold value and the inflow heat amount is larger than the provided heat amount, the control device changes the sequence in which the heat medium travels along the exhaust-gas heat-exchange line and the heat-medium cooling line in the waste heat recovery line in accordance with a water amount in the condensed water tank.
(19) In the cogeneration system according to (18) described above, when the water amount in the condensed water tank is larger than a first water-amount threshold value, the control device switches the circulation line such that the heat medium travels along the exhaust-gas heat-exchange line and subsequently travels along the heat-medium cooling line.
(20) In the cogeneration system according to (18) described above, when the water amount in the condensed water tank is equal to or smaller than a second water-amount threshold value, the control device switches the circulation line such that the heat medium travels along the heat-medium cooling line and subsequently travels along the exhaust-gas heat-exchange line.
(21) In the cogeneration system according to any one of (18) to (20) described above, when a temperature at an inlet for the heat medium in the third heat exchange unit is equal to or higher than a sixth temperature threshold value and the water amount in the condensed water tank is equal to or smaller than a third water-amount threshold value, the control device reduces an amount of electricity generated by the fuel cell.
(22) In the cogeneration system according to any one of (10) to (21) described above, when the fuel cell is stopped and the hot-water supply demand is absent and when a temperature at a lower part of the heat storage tank is equal to or lower than a seventh temperature threshold value, the control device switches the waste heat recovery line such that the heat medium travels sequentially along the exhaust-gas heat-exchange line and the heat-medium heating line.
(23) In the cogeneration system according to any one of (10) to (22) described above, when the fuel cell is stopped and the hot-water supply demand is present and when a temperature at a lower part of the heat storage tank is equal to or lower than an eighth temperature threshold value, the control device switches the waste heat recovery line such that the heat medium travels along the heat-medium heating line alone.
(24) In the cogeneration system according to (23) described above, when the temperature at the lower part of the heat storage tank is equal to or lower than a ninth temperature threshold value, a heat providing capability of the heat storage tank is limited.

### ADVANTAGEOUS EFFECT

The cogeneration system according to the present disclosure having the above-described configuration may efficiently add demanded heat to a medium.

### BRIEF DESCRIPTION OF THE DRAWINGS

FIG. 1 is a schematic configuration diagram illustrating a flowing state of a heat medium in a cogeneration system according to a first embodiment when the heat medium is heated by a temperature adjuster.
FIG. 2 is a structural diagram schematically illustrating an internal configuration of a fuel cell in FIG. 1.
FIG. 3 is a schematic configuration diagram illustrating the flowing state of the heat medium in the cogeneration system according to the first embodiment when the heat medium is cooled by the temperature adjuster.
FIG. 4 is a schematic configuration diagram of a cogeneration system according to a second embodiment.
FIG. 5 is a schematic configuration diagram of a cogeneration system according to a third embodiment.
FIG. 6 is a schematic configuration diagram of a cogeneration system according to a fourth embodiment.
FIG. 7 is a flowchart illustrating control executed by a control device in FIG. 6.
FIG. 8 is a flowchart illustrating the control executed by the control device in FIG. 6.
FIG. 9 is a flowchart illustrating the control executed by the control device in FIG. 6.

### DESCRIPTION OF EMBODIMENTS

An embodiment of a cogeneration system to which the present disclosure is applied will be described below with reference to the drawings.

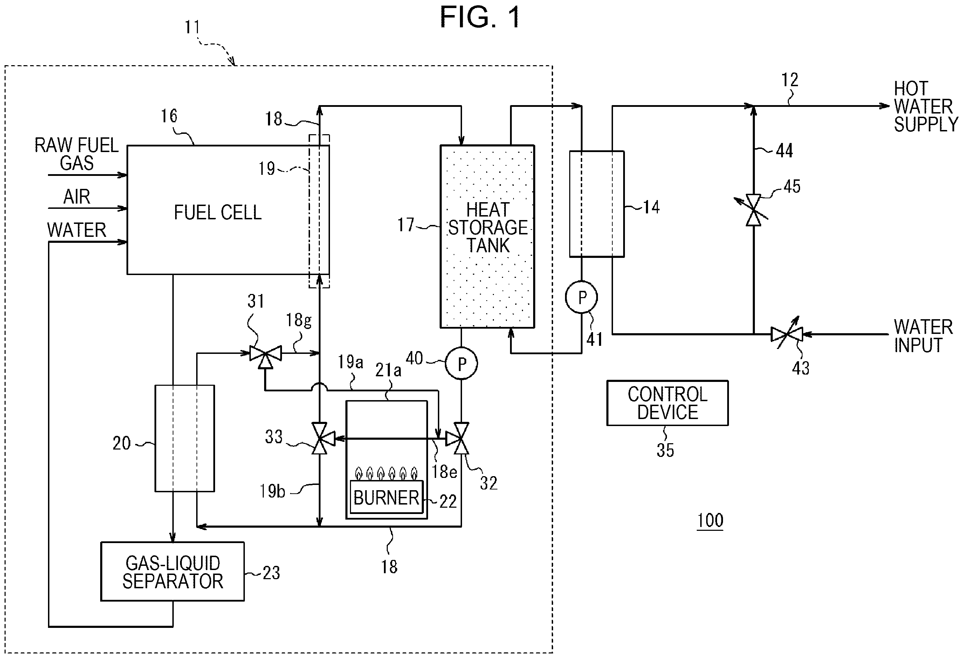

As illustrated in FIG. 1, a cogeneration system 100 according to an embodiment of the present disclosure includes a fuel cell system 11 and an indirect supply line 12. The cogeneration system 100 is provided in, for example, a home. The cogeneration system 100 may have a control device 35.

The fuel cell system 11 generates electricity by using raw fuel gas, air, and water. The fuel cell system 11 generates heat during operation for generating electricity. The heat generated by the fuel cell system 11 is recovered by using a heat medium. The indirect supply line 12 exchanges heat between the heat medium and a medium supplied from, for example, a water supply and supplies hot water to, for example, a consumer facility.

The fuel cell system 11 has a fuel cell 16, a heat storage tank 17, and a waste heat recovery line 18. The fuel cell system 11 may have a third heat exchange unit 20 and a temperature adjuster 21a.

The fuel cell 16 may have at least one of a reformer and a cell stack. The fuel cell 16 may be a fuel cell module containing the reformer and the cell stack within a housing. The reformer produces fuel, such as hydrogen, by causing a steam-reforming reaction to occur between water and gas supplied as raw fuel. The cell stack is, for example, a solid oxide fuel cell (SOFC) and generates electricity in accordance with an electrochemical reaction using an oxidant, such as oxygen contained in air, and fuel produced by the reformer. The cell stack also produces water in accordance with the electrochemical reaction. Unreacted fuel and unreacted oxidant discharged from the cell stack are combusted and give energy for causing the steam-forming reaction to occur in the reformer. The water discharged from the cell stack is discharged in the form of high-pressure gas from the fuel cell 16 together with combustion gas caused by the combustion of the unreacted fuel and the unreacted oxidant. The cell stack may be a polymer electrolyte fuel cell (PEFC). In this case, with regard to each of other components, any component may be used, where appropriate.

Exhaust gas discharged from the fuel cell 16 may contain the combustion gas and the gaseous water. The exhaust gas discharged from the fuel cell 16 may exchange heat with the heat medium by using the third heat exchange unit 20, to be described later. The exhaust gas cooled in accordance with the heat exchange may be separated into gaseous exhaust gas and condensed liquid water by a gas-liquid separator 23. The condensed liquid water may be stored in a condensed water tank of the fuel cell system 11. A water sensor that measures a water amount W in the condensed water tank may be provided. The separated exhaust gas may be discharged outside the fuel cell system 11. The separated water may be delivered as water to be used in the steam-reforming reaction to the fuel cell 16.

The heat storage tank 17 stores the heat medium and provides heat in response to a hot-water supply demand. The heat medium recovers heat generated from the fuel cell 16. For example, the heat medium is a fluid with a large specific heat, such as water, an antifreeze, or the like.

The waste heat recovery line 18 causes the heat medium stored in the heat storage tank 17 to circulate between the fuel cell 16 and the heat storage tank 17. A normal path of the waste heat recovery line 18 may be a circulation path starting from the heat storage tank 17, extending through the third heat exchange unit 20 and a first heat exchange unit 19 in sequence, and then returning to the heat storage tank 17. The waste heat recovery line 18 may be provided with a first pump 40. The first pump 40 may increase the pressure to cause the heat medium stored in the heat storage tank 17 to circulate.

The waste heat recovery line 18 may be provided with a first three-way valve 31 downstream of the third heat exchange unit 20. A first flow path 18g may be connected to the first three-way valve 31. The first flow path 18g may bypass the temperature adjuster 21a and be connected to the upstream side of the first heat exchange unit 19 in the waste heat recovery line 18.

A fourth flow path 19a may be connected to the first three-way valve 31. In the waste heat recovery line 18, the fourth flow path 19a may be connected to the upstream side of the temperature adjuster 21a. Specifically, the fourth flow path 19a may be connected to the upstream side of the temperature adjuster 21a in a second flow path (temperature adjustment line) 18e, to be described later.

The waste heat recovery line 18 may be provided with a second three-way valve 32 downstream of the heat storage tank 17. The second flow path 18e may be connected to the second three-way valve 32. The second flow path 18e is a bypass path different from the normal path described above. The second flow path 18e may bypass the third heat exchange unit 20 and be connected to the upstream side of the first heat exchange unit 19 in the waste heat recovery line 18.

The second flow path 18e may be provided with a third three-way valve 33 downstream of the temperature adjuster 21a. A third flow path (second bypass flow path) 19b may be connected to the third three-way valve 33. The third flow path 19b may be connected to the upstream side of the third heat exchange unit 20 in the waste heat recovery line 18.

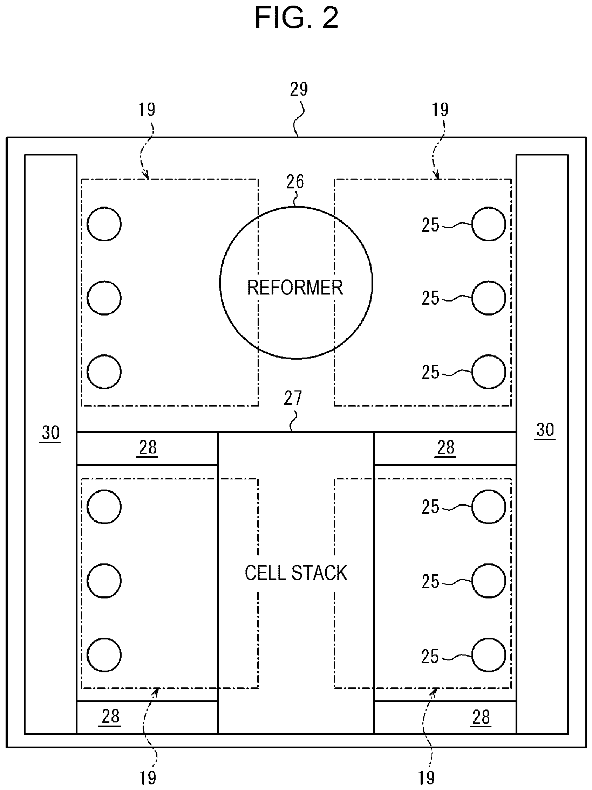

The first heat exchange unit 19 may be positioned close to the outer side of the fuel cell 16 (i.e., the outer side of a housing 29) or may be positioned inside the fuel cell 16 (i.e., inside the housing 29). If positioned close to the outer side of the fuel cell 16, the first heat exchange unit 19 may be positioned at the outer side of the fuel cell 16 in a contactable manner. If positioned inside the fuel cell 16, the first heat exchange unit 19 may be positioned around at least one of a reformer 26 and a cell stack 27. In this case, the first heat exchange unit 19 may be positioned around at least one of the reformer 26 and the cell stack 27 without having a heat insulator interposed therebetween. For example, as illustrated in FIG. 2, the first heat exchange unit 19 may be formed by providing a pipe line 25, along which the medium flowing along the waste heat recovery line 18 travels, around at least one of the reformer 26 and the cell stack 27 without having a heat insulator interposed therebetween. In the present disclosure, a heat insulator may be a material that suppresses heat movement and may be, for example, a fibrous heat insulator, such as glass wool, or a foamed heat insulator, such as resin foam. Therefore, in the present disclosure, the housing 29, to be described below, is not included as a heat insulator. The expression "without having a heat insulator interposed therebetween" implies that a heat-insulating material is not positioned on a line connecting between the surface of at least a part of the pipe line 25 and the surface of at least one of the reformer 26 and the cell stack 27 with the shortest distance. Therefore, a configuration where a gasket 28 composed of a heat-insulating material is positioned closer to the reformer 26 or the cell stack 27 than the pipe line 25 may function as the first heat exchange unit 19.

The pipe line 25 for the heat medium in the first heat exchange unit 19 may be provided within the housing 29 surrounding at least one of the reformer 26 and the cell stack 27. In a configuration where the pipe line 25 is provided within the housing 29, a heat insulator 30 may be positioned between the pipe line 25 and the housing 29. Alternatively, the pipe line 25 may be positioned close to the outer side of the housing 29 in a range where heat of at least one of the reformer 26 and the cell stack 27 is transferrable.

The first heat exchange unit 19 causes the heat medium circulating along the waste heat recovery line 18 to recover the heat generated at the fuel cell 16. More specifically, the heat is recovered in the following manner. The outer surface of the pipe line 25 is heated in accordance with radiation from the reformer 26 or the cell stack 27 or convection of ambient gas. The first heat exchange unit 19 recovers the heat by transferring the heat of the outer surface to the heat medium when the heat medium circulating along the waste heat recovery line 18 flows along the pipe line 25.

As illustrated in FIG. 1, the third heat exchange unit 20 is, for example, a heat exchanger. The third heat exchange unit 20 causes the exhaust gas discharged from the fuel cell 16 and the heat medium circulating along the waste heat recovery line 18 to exchange heat with each other. The third heat exchange unit 20 may be positioned upstream of the first heat exchange unit 19 in the waste heat recovery line 18. The exhaust gas discharged from the fuel cell 16 is normally lower in temperature (e.g., about 200°C to 300°C) than the ambient temperature around the reformer 26 and the cell stack 27. Therefore, the third heat exchange unit 20 functions as a heat-medium preheater for the first heat exchange unit 19.

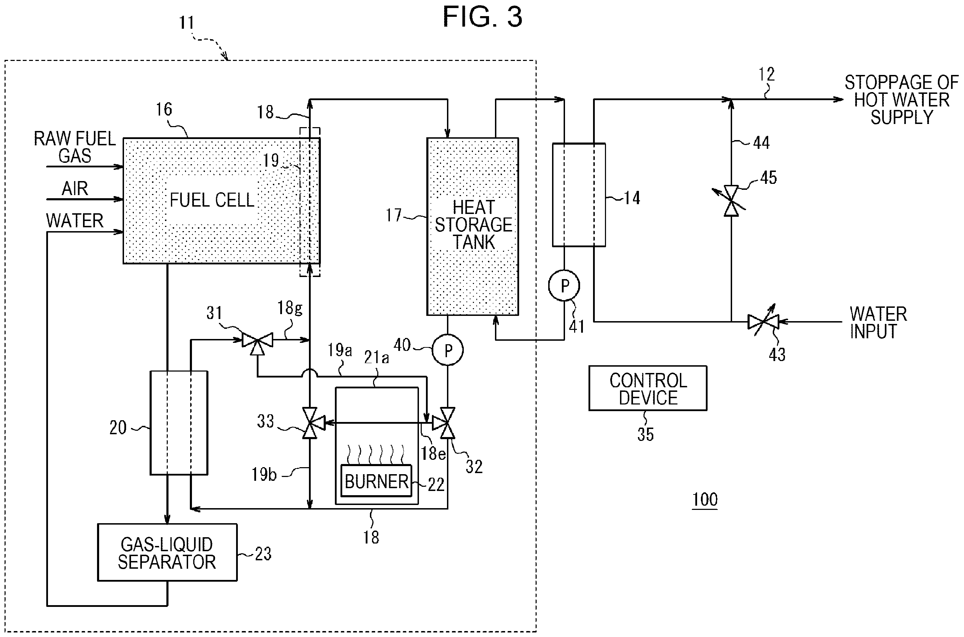

The temperature adjuster 21a may heat or cool the heat medium circulating along the waste heat recovery line 18. The temperature adjuster 21a is, for example, a fin pipe. The temperature adjuster 21a may include a burner 22. The burner 22 has a fuel injection line that supplies gas fuel and an air supply line that supplies outside air by forcefully suctioning the air with a blower. The burner 22 mixes the gas fuel and the outside air and causes combustion thereof at an ignition port. With the combustion of the burner 22, the heat medium may be heated via the temperature adjuster 21a. As illustrated in FIG. 3, the burner 22 may use the blower to forcefully suction the outside air in a non-combusted state and blow the outside air to the temperature adjuster 21a. The blown air cools the heat medium via the temperature adjuster 21a.

The indirect supply line 12 may be supplied with the medium from, for example, the water supply. The indirect supply line 12 may be provided with a first flow-rate adjustment valve 43 that adjusts the supply amount of the medium. The medium is, for example, water.

The indirect supply line 12 includes a second heat exchange unit 14. The second heat exchange unit 14 may cause the medium and the heat medium stored in the heat storage tank 17 to exchange heat with each other. The indirect supply line 12 supplies hot water to, for example, the consumer facility. In other words, the indirect supply line 12 may be a hot-water supply path. The indirect supply line 12 may be provided with a bypass path 44 bypassing the second heat exchange unit 14. The bypass path 44 may be provided with a second flow-rate adjustment valve 45. By using the second flow-rate adjustment valve 45 to adjust the flow rate of the medium bypassed to the bypass path 44, the temperature of the medium fed from the indirect supply line 12 may be adjusted.

The control device 35 includes at least one processor and a memory. The processor may include a general-purpose processor that loads a specific program and executes a specific function, and a dedicated processor specialized for a specific process. The dedicated processor may include an application-specific integrated circuit (ASIC). The processor may include a programmable logic device (PLD). The PLD may include a field-programmable gate array (FPGA). The control device 35 may be either one of a SoC (System-on-a-Chip) in which one or more processors operate in cooperation with each other and a SiP (System In a Package). The control device 35 may control the components, such as the burner 22, the first three-way valve 31, the second three-way valve 32, the third three-way valve 33, and the like, of the cogeneration system 100. An example of control by the control device 35 will be described below.

When the indirect supply line 12 is supplying the medium, the medium is heated at the second heat exchange unit 14 by exchanging heat with the heat medium in the heat storage tank 17. Thus, the temperature of the heat medium stored in the heat storage tank 17 decreases. For example, the control device 35 may control the operation of the first three-way valve 31, the second three-way valve 32, the third three-way valve 33, and the burner 22 based on the temperature of the heat medium stored in the heat storage tank 17.

The heat medium in the heat storage tank 17 flows downstream via the first pump 40 disposed in the waste heat recovery line 18.

With the waste heat recovery line 18 serving as the normal path, the control device 35 may control the second three-way valve 32 to cause the heat medium in the heat storage tank 17 to flow to the third heat exchange unit 20.

At the third heat exchange unit 20, the heat medium is heated by exchanging heat with the exhaust gas discharged from the fuel cell 16. The control device 35 controls the first three-way valve 31 to cause the heat medium flowing out from the third heat exchange unit 20 to flow to the first heat exchange unit 19 via the first flow path 18g.

At the first heat exchange unit 19, the heat medium is heated by the heat generated from the fuel cell 16. Subsequently, the heat medium flows to the heat storage tank 17.

If the heat medium needs to be further heated or if the heat medium needs to be cooled, the control device 35 controls the first three-way valve 31 and the second three-way valve 32 to cause the heat medium flowing out from the third heat exchange unit 20 to flow to the temperature adjuster 21a via the second flow path 18e and the fourth flow path 19a. In this case, the control device 35 controls the burner 22 of the temperature adjuster 21a. Specifically, when the heat medium requires heat, the control device 35 causes combustion of the burner 22 so as apply heat to the heat medium with reference to FIG. 1. When the heat medium is to be cooled, the control device 35 stops the combustion of the burner 22 of the temperature adjuster 21a with reference to FIG. 3. In addition, the control device 35 causes the blower of the burner 22 to forcefully suction the outside air and blow the outside air to the temperature adjuster 21a, thereby cooling the heat medium. The control device 35 may control the third three-way valve 33 in accordance with the heat of the heat medium so as to cause the heat medium flowing through the temperature adjuster 21a to flow toward the upstream side of the third heat exchange unit 20 via the third flow path 19b. The control device 35 may control the third three-way valve 33 in accordance with the heat of the heat medium so as to cause the heat medium flowing through the temperature adjuster 21a to flow toward the upstream side of the first heat exchange unit 19.

At the first heat exchange unit 19, the heat medium exchanges heat with the fuel cell 16. Accordingly, the heat medium is heated. Subsequently, the heat medium flows to the heat storage tank 17.

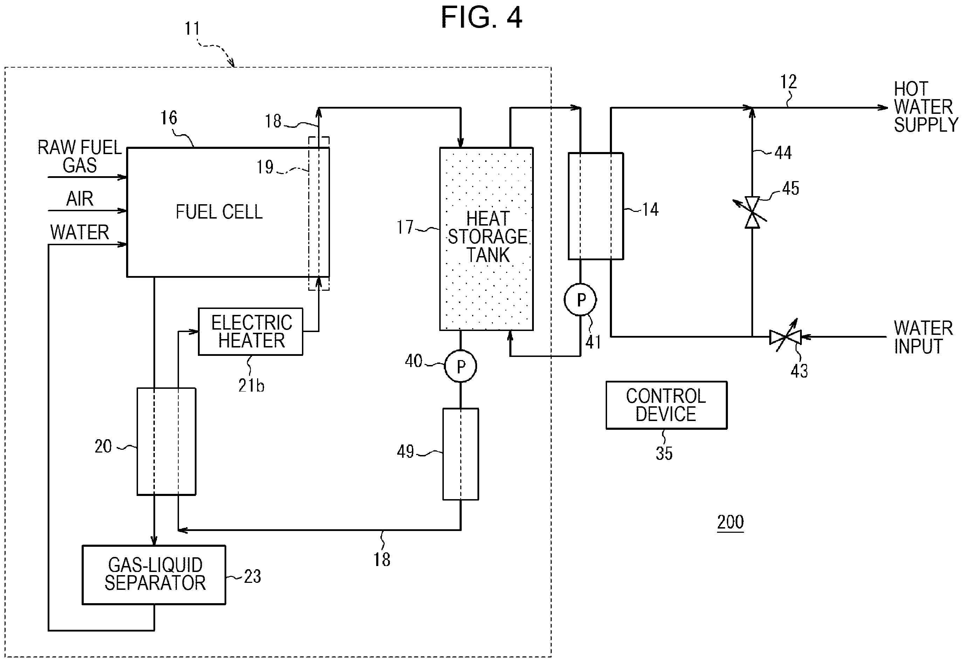

As illustrated in FIG. 4, a cogeneration system 200 according to a second embodiment of the present disclosure has a configuration similar to that of the cogeneration system 100. In the following, components identical to those of the cogeneration system 100 will not be described again, and components different from those of the cogeneration system 100 will be described.

The fuel cell system 11 may have a heat radiation unit 49 downstream of the heat storage tank 17 in the waste heat recovery line 18. The heat radiation unit 49 is, for example, a radiator and causes the outside air supplied by the blower and the heat medium to exchange heat with each other, thereby causing the heat medium to radiate heat. The third heat exchange unit 20 may be provided downstream of the heat radiation unit 49.

In the waste heat recovery line 18, a temperature adjuster 21b may be provided between the first heat exchange unit 19 and the third heat exchange unit 20. The temperature adjuster 21b may heat or cool the heat medium circulating along the waste heat recovery line 18. The temperature adjuster 21b may include a heater, and may heat the heat medium by using heat generated by the heater. The heater may be an electric heater. The electric heater may be supplied with electric power from at least one of a commercial line or the fuel cell 16. The first heat exchange unit 19 may be positioned downstream of the temperature adjuster 21b.

Each of the cogeneration systems 100 and 200 according to the embodiments having the above-described configurations includes the fuel cell system 11 and the indirect supply line 12. The fuel cell system 11 has the first heat exchange unit 19 positioned close to the outer side of the fuel cell 16 or inside thereof and causing the heat medium to recover the heat generated from the fuel cell 16, the heat storage tank 17 storing the heat medium, and the waste heat recovery line 18 that causes the heat medium to circulate between the fuel cell 16 and the heat storage tank 17. The indirect supply line 12 includes the second heat exchange unit 14 that causes the heat medium stored in the heat storage tank 17 and the medium to exchange heat with each other.

In a typical cogeneration system using a fuel cell, the waste heat is recovered by causing the exhaust gas of the fuel cell and the medium to exchange heat with each other. However, sufficient heating of the medium is difficult, and temporary supplying of a large amount of hot water is difficult. In a cogeneration system that recovers the waste heat from the exhaust gas and in which temporary supplying of a large amount of heat is difficult, a water heater is required to meet the demand for temporarily supplying the large amount of heat. In contrast, in each of the cogeneration systems 100 and 200 according to the embodiments having the above-described configurations, both the reformer 26 and the cell stack 27 normally operate at a higher temperature than the exhaust gas, so that a large amount of heat may be recovered, as compared with the configuration that recovers the waste heat from the exhaust gas. The cogeneration systems 100 and 200 each have the heat storage tank 17 storing the heat medium. The heat medium may accumulate a large amount of heat. Therefore, each of the cogeneration systems 100 and 200 may temporarily supply a large amount of medium. Hence, a water heater does not need to be installed in each of the cogeneration systems 100 and 200. Consequently, the cogeneration systems 100 and 200 may each be reduced in size.

In each of the cogeneration systems 100 and 200 according to the embodiments, the fuel cell system 11 has the third heat exchange unit 20 that causes the exhaust gas of the fuel cell 16 and the heat medium circulating along the waste heat recovery line 18 to exchange heat with each other. With this configuration, each of the cogeneration systems 100 and 200 may decrease the temperature of the exhaust gas of the fuel cell 16.

The third heat exchange unit 20 in each of the cogeneration systems 100 and 200 according to the embodiments is positioned upstream of the first heat exchange unit 19 in the waste heat recovery line 18. With this configuration, the heat medium is heated at the third heat exchange unit 20 and subsequently flows toward the upstream side of the first heat exchange unit 19 where the heat generated from the fuel cell 16 is recovered. Hence, a situation where the fuel cell 16 surrenders a large amount of heat to a low-temperature heat medium may be suppressed. Consequently, the power generation efficiency of the fuel cell 16 may be maintained.

The third heat exchange unit 20 in the cogeneration system 200 according to the embodiment has the heat radiation unit 49 between the heat storage tank 17 and the third heat exchange unit 20 in the waste heat recovery line 18. With this configuration, the heat medium in the heat storage tank 17 is cooled by the heat radiation unit 49 before flowing toward the upstream side of the third heat exchange unit 20. Hence, the third heat exchange unit 20 may sufficiently cool the exhaust gas of the fuel cell 16 and recover reformed water to be supplied to the fuel cell 16.

The cogeneration system 100 according to the embodiment has the temperature adjuster 21a positioned between the first heat exchange unit 19 and the third heat exchange unit 20 in the waste heat recovery line 18 and capable of heating or cooling the heat medium circulating along the waste heat recovery line 18. With this configuration, the cogeneration system 100 may further heat the heat medium when, for example, the heat supplied to the heat medium is insufficient.

The waste heat recovery line 18 in the fuel cell system 11 of the cogeneration system 100 according to the embodiment includes the first flow path 18g downstream of the third heat exchange unit 20. The first flow path 18g bypasses the temperature adjuster 21a and connects to the first heat exchange unit 19. With this configuration, when the temperature adjuster 21a does not heat or cool the heat medium, a pressure loss may be reduced as a result of bypassing the temperature adjuster 21a. Consequently, the load on the first pump 40 may be reduced.

The waste heat recovery line 18 in the fuel cell system 11 of the cogeneration system 100 according to the embodiment includes the second flow path 18e downstream of the heat storage tank 17, and also includes the third flow path 19b. The second flow path 18e bypasses the third heat exchange unit 20 and connects to the first heat exchange unit 19. The third flow path 19b branches off from the second flow path 18e and connects to the third heat exchange unit 20. With this configuration, when the heat medium is to be cooled, as illustrated in FIG. 3, the heat medium may be cooled at the temperature adjuster 21a via the second flow path 18e and the third flow path 19b, and the cooled heat medium may subsequently flow into the third heat exchange unit 20.

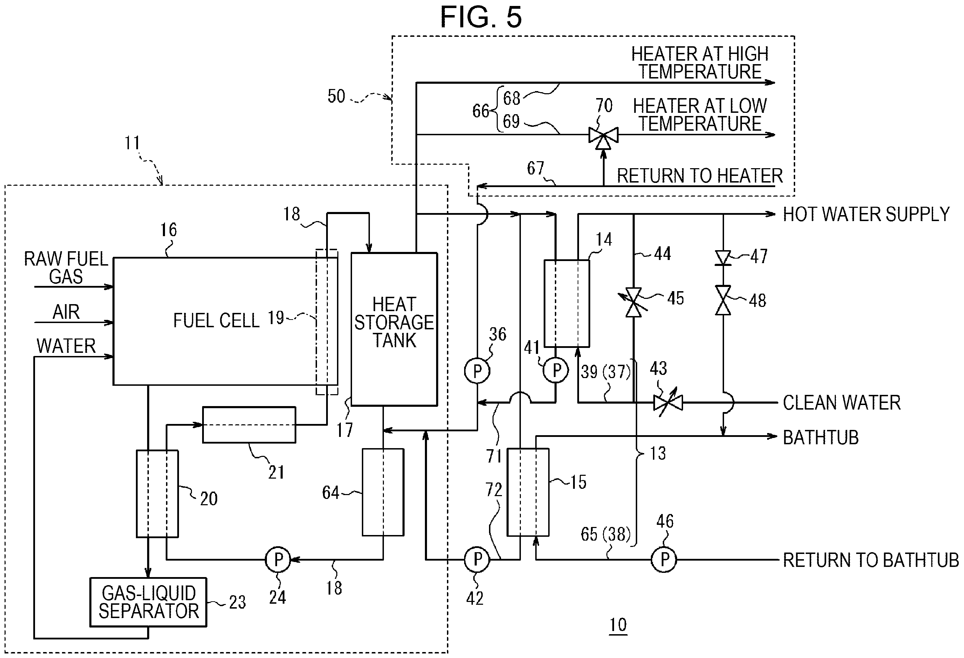

As illustrated in FIG. 5, a cogeneration system 10 according to a third embodiment of the present disclosure includes the fuel cell system 11, a direct supply line 50, and an indirect supply line 13. The cogeneration system 10 is provided in, for example, a home.

The fuel cell system 11 generates electricity by using raw fuel gas, air, and water. The fuel cell system 11 generates heat during operation for generating electricity. The heat generated by the fuel cell system 11 is recovered by using a heat medium. The direct supply line 50 supplies the heat to an area where the direct supply line 50 is disposed by causing the heat medium to flow therethrough. As will be described later, the indirect supply line 13 may have at least one of the second heat exchange unit 14 and a fourth heat exchange unit 15, and causes the at least one of the heat exchange units to perform heat exchange between the heat medium and a medium, thereby supplying the heat as the heated medium.

The fuel cell system 11 has the fuel cell 16 and the heat storage tank 17. The fuel cell system 11 may have the waste heat recovery line 18, the first heat exchange unit 19, the third heat exchange unit 20, a heating unit 21, and a heat radiation unit 64.

The waste heat recovery line 18 causes the heat medium to circulate between the fuel cell 16 and the heat storage tank 17. The waste heat recovery line 18 may be provided with a first pump 24. The first pump 24 may increase the pressure to cause the heat medium to flow from the heat storage tank 17 toward the fuel cell 16.

The first heat exchange unit 19 may be positioned around at least one of the reformer and the cell stack.

The pipe line 25 for the heat medium in the first heat exchange unit 19 may be provided within the housing 29 surrounding at least one of the reformer 26 and the cell stack 27. In the configuration where the pipe line 25 is provided within the housing 29, the heat insulator 30 may be positioned between the pipe line 25 and the housing 29. Alternatively, the pipe line 25 may be positioned outside the housing 29 in a range where heat of at least one of the reformer 26 and the cell stack 27 is transferrable.

The heating unit 21 is, for example, a heater. The heating unit 21 may be positioned between the first heat exchange unit 19 and the third heat exchange unit 20 in the waste heat recovery line 18. The heating unit 21 may heat the heat medium circulating along the waste heat recovery line 18. The heating unit 21 may be an electric heater. The electric heater may be supplied with electric power from at least one of the commercial line or the fuel cell 16.

The heat radiation unit 64 may be positioned downstream of the heat storage tank 17 and upstream of the third heat exchange unit 20 in the waste heat recovery line 18. The heat radiation unit 64 may be provided downstream of a connection section where the waste heat recovery line 18 connects to a first indirect supply line 37, to be described later. The heat radiation unit 64 is, for example, a radiator and causes outside air supplied by a blower and the heat medium to exchange heat with each other, thereby causing the heat medium to radiate heat.

As mentioned above, the direct supply line 50 supplies heat by causing the heat medium stored in the heat storage tank 17 to flow. The direct supply line 50 may be connected to, for example, a pipe embedded inside a floor, a wall, or the like in the home. The direct supply line 50 may supply the heat medium to the pipe.

The direct supply line 50 may include a feed path 66 and a return path 67. In the direct supply line 50, the heat medium at a relatively high temperature in the heat storage tank 17 is fed via the feed path 66. In the direct supply line 50, the heat medium at a relatively low temperature due to the supplying of the heat flows into the heat storage tank 17 via the return path 67. The return path 67 may be provided with a pump 36 for feeding the heat medium to the direct supply line 50.

The feed path 66 may bifurcate into a high-temperature feed path 68 and a low-temperature feed path 69. The low-temperature feed path 69 may be connected to the return path 67. The low-temperature feed path 69 may be connected to the return path 67 via a three-way valve 70. The low-temperature feed path 69 may mix the low-temperature heat medium flowing along the return path 67 with the high-temperature heat medium fed from the heat storage tank 17, thereby feeding the heat medium reduced in temperature relative to that in the high-temperature feed path 68. The feed path 66 and the return path 67 may be connected to each other via the pipe embedded inside the aforementioned floor, wall, or like in the home. The heat medium fed from the feed path 66 may flow into the return path 67 via the pipe. In the high-temperature feed path 68, the high-temperature heat accumulated in the heat medium may be directly used, so that a temperature loss may be reduced. The supplying of the heat using the high-temperature feed path 68 is suitable in, for example, a device that requires a feed temperature of about 80°C, such as a high-temperature terminal (bath dehumidifier) of a heater.

As mentioned above, the indirect supply line 13 supplies heat by causing the heat medium stored in the heat storage tank 17 to exchange heat with the medium. The medium is, for example, water. A portion of the medium may be supplied from outside the facility where the cogeneration system 10 is provided. A portion of the medium may be supplied by causing a portion of the medium fed from the cogeneration system 10 to return by circulation.

The indirect supply line 13 may include the first indirect supply line 37 and a second indirect supply line 38. The first indirect supply line 37 may include the second heat exchange unit 14. The second heat exchange unit 14 may cause the medium flowing along a first medium supply path 39 serving as the first indirect supply line 37 and the heat medium stored in the heat storage tank 17 to exchange heat with each other. The second indirect supply line 38 may include the fourth heat exchange unit 15. The fourth heat exchange unit 15 may cause the medium flowing along a second medium supply path 65 serving as the second indirect supply line 38 and the heat medium stored in the heat storage tank 17 to exchange heat with each other.

One end of a first heat medium line 71 extending from the heat storage tank 17 to the second heat exchange unit 14 and one end of a second heat medium line 72 extending from the heat storage tank 17 to the fourth heat exchange unit 15 may be connected to the waste heat recovery line 18. For example, one downstream end of the first heat medium line 71 and one downstream end of the second heat medium line 72 are connected to the downstream side of the heat storage tank 17 in the waste heat recovery line 18. The one downstream end of the first heat medium line 71 may be provided between the heat storage tank 17 and the heat radiation unit 64 in the waste heat recovery line 18. In other words, the heat radiation unit 64 may be provided downstream of a connection section between the first heat medium line 71 and the waste heat recovery line 18. The one downstream end of the second heat medium line 72 may be provided between the heat storage tank 17 and the heat radiation unit 64 in the waste heat recovery line 18. The first heat medium line 71 may be provided with a pump 41 for feeding the heat medium to the first heat medium line 71. The second heat medium line 72 may be provided with a pump 42 for feeding the heat medium to the second heat medium line 72.

The first medium supply path 39 is, for example, a hot-water supply path. More specifically, the first medium supply path 39 uses the first heat exchange unit 19 to heat clean water supplied from outside the facility where the cogeneration system 10 is provided, and supplies the hot water to, for example, the consumer facility. The first medium supply path 39 may be provided with the first flow-rate adjustment valve 43 that adjusts the supply amount of the medium.

The first medium supply path 39 may be provided with the bypass path 44 bypassing the second heat exchange unit 14. The bypass path 44 may be provided with the second flow-rate adjustment valve 45. By adjusting the flow rate of the heat medium bypassed to the bypass path 44 by the second flow-rate adjustment valve 45, the temperature of the medium fed from the first medium supply path 39 may be adjusted.

The second medium supply path 65 is, for example, a bathtub hot-water supply path. In a more specific example, the second medium supply path 65 uses the fourth heat exchange unit 15 to heat water recovered from a bathtub, and supplies the hot water to the bathtub. The second medium supply path 65 may be provided with a pump 46 for feeding the medium to the second medium supply path 65.

The first medium supply path 39 may branch off into two at the downstream side of the first heat exchange unit 19. One of the branch paths may be connected to the downstream side of the fourth heat exchange unit 15 in the second medium supply path 65. In other words, a feed path of the first medium supply path 39 and a feed path of the second medium supply path 65 may be connected to each other.

One of the branch paths may be provided with a check valve 47. The check valve 47 suppresses a backflow of the medium from the second medium supply path 65 toward the first medium supply path 39. One of the branch paths may be provided with a bathtub water-injection valve 48. By being opened, the bathtub water-injection valve 48 increases the hot water in the bathtub.

In the indirect supply line 13 having the above configuration, clean water is indirectly heated, so that the usage-side hot-water temperature can be readily controlled based on indirect heating, and hygiene issues are nonexistent. Hence, the indirect supply line 13 achieves enhanced safety and convenience with respect to hot-water supply and human contact objects, such as the bathroom.

The cogeneration system 10 according to this embodiment having the above-described configuration has the direct supply line 50 and the indirect supply line 13. The direct supply line 50 supplies heat by causing the heat medium stored in the heat storage tank 17 to flow. The indirect supply line 13 supplies the heat by causing the heat medium stored in the heat storage tank 17 and the medium to exchange heat with each other. According to this configuration, the cogeneration system 10 may utilize the waste heat of the fuel cell system 11 in various ways.

In the cogeneration system 10 according to this embodiment, the indirect supply line 13 has the first indirect supply line 37 and the second indirect supply line 38. The first indirect supply line 37 has the second heat exchange unit 14 that causes the medium flowing along the first medium supply path 39 and the heat medium to exchange heat with each other. The second indirect supply line 38 has the fourth heat exchange unit 15 that causes the medium flowing along the second medium supply path 65 and the heat medium to exchange heat with each other. The feed path of the first medium supply path 39 and the feed path of the second medium supply path 65 are connected to each other. According to this configuration, the cogeneration system 10 reheats the hot water retained in, for example, the bathtub by causing the water to circulate along the second medium supply path 65, and supplies the hot water heated in the first medium supply path 39 toward the second medium supply path 65, so that the amount of hot water in the bathtub may be increased. Accordingly, the cogeneration system 10 may further utilize the waste heat of the fuel cell system 11 in various ways.

In the cogeneration system 10 according to this embodiment, the fuel cell system 11 has the waste heat recovery line 18 and the first heat exchange unit 19. The waste heat recovery line 18 causes the heat medium to circulate between the fuel cell 16 and the heat storage tank 17. The first heat exchange unit 19 is positioned around at least one of the reformer 26 and the cell stack 27 included in the fuel cell 16 without having a heat insulator interposed therebetween, and causes the heat medium circulating along the waste heat recovery line 18 to recover the heat generated from the fuel cell 16. In a cogeneration system using a fuel cell in the related art, the waste heat is recovered by causing the exhaust gas of the fuel cell 16 and the heat medium to exchange heat with each other. However, sufficient heating of the heat medium is difficult, and temporary supplying of a large amount of heat is difficult. In contrast, in the cogeneration system 10 according to this embodiment having the above-described configuration, both the reformer 26 and the cell stack 27 normally operate at a higher temperature than the exhaust gas, so that a large amount of heat may be recovered, as compared with the configuration that recovers the waste heat from the exhaust gas. Therefore, the cogeneration system 10 may temporarily supply a large amount of heat. In a cogeneration system that recovers the waste heat from the exhaust gas and in which temporary supplying of a large amount of heat is difficult, a water heater is required to meet the demand for temporarily supplying the large amount of heat. In contrast, the cogeneration system 10 is capable of temporarily supplying a large amount of heat, so that a water heater does not need to be installed.

In the cogeneration system 10 according to this embodiment, the fuel cell system 11 has the third heat exchange unit 20 that causes the exhaust gas of the fuel cell 16 and the heat medium circulating along the waste heat recovery line 18 to exchange heat with each other. With this configuration, the cogeneration system 10 may cool the exhaust gas at the third heat exchange unit 20 and recover reformed water to be supplied to the fuel cell 16.

In the cogeneration system 10 according to this embodiment, the third heat exchange unit 20 is positioned upstream of the first heat exchange unit 19 in the waste heat recovery line 18. With this configuration, the cogeneration system 10 preheats the heat medium before the heat medium is heated at the first heat exchange unit 19, thereby suppressing a radical decrease in the temperature of the fuel cell 16 caused by the heat exchange with the heat medium at the first heat exchange unit 19. Therefore, while being provided with the first heat exchange unit 19, the cogeneration system 10 may suppress instable operation of the fuel cell 16 caused by a temperature decrease.

In the cogeneration system 10 according to this embodiment, the fuel cell system 11 has the heating unit 21 positioned between the first heat exchange unit 19 and the third heat exchange unit 20 in the waste heat recovery line 18 and configured to heat the heat medium circulating along the waste heat recovery line 18. With this configuration, the cogeneration system 10 may supply heat in response to a demand for heat even when supplying of heat by the fuel cell 16 in response to the demand is insufficient. A situation where the supplying of heat by the fuel cell 16 in response to the demand for heat is insufficient may occur, for example, when the requested amount of heat via the direct supply line 50 or the indirect supply line 13 increases or when the fuel cell 16 stops.

In the cogeneration system 10 according to this embodiment, the fuel cell system 11 has the heat radiation unit 64 provided downstream of the connection section where the waste heat recovery line 18 connects to the first heat medium line 71. While heat is being supplied outside the cogeneration system 10 via the direct supply line 50 or the indirect supply line 13, the cooled heat medium returns to the waste heat recovery line 18, so that the heat medium is cooled at the upstream side of the third heat exchange unit 20 in the waste heat recovery line 18. At the third heat exchange unit 20, water contained in the exhaust gas may be recovered by the cooled heat medium. On the other hand, if the heat medium is not sufficiently cooled upstream of the third heat exchange unit 20, the recovered amount of water decreases. In contrast, the fuel cell system 11 having the above-described configuration may cool the heat accumulated in the heat medium even when the heat medium is not sufficiently cooled upstream of the third heat exchange unit 20, as in a case where the amount of heat supplied outside the cogeneration system 10 via the direct supply line 50 or the indirect supply line 13 is small. Therefore, the fuel cell system 11 may suppress a radical decrease in the amount of water recovered from the exhaust gas.

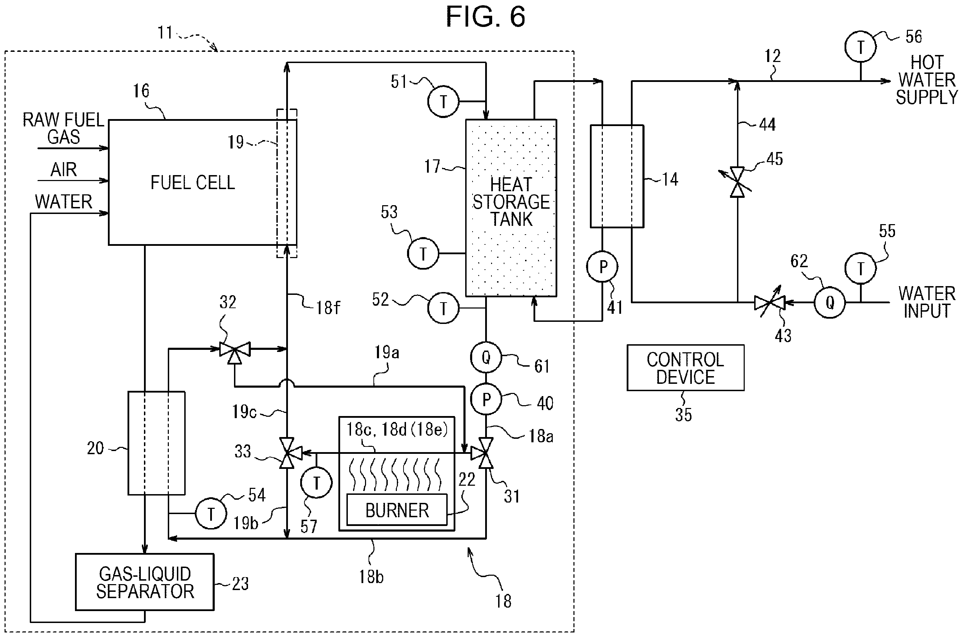

As illustrated in FIG. 6, the fuel cell system 11 according to a fourth embodiment of the present disclosure includes the fuel cell 16, the heat storage tank 17, the waste heat recovery line 18, and the control device 35. The fuel cell system 11 is provided in, for example, a home.

The heat storage tank 17 stores a heat medium. The heat medium is a fluid with a large specific heat, such as water, an antifreeze, or the like. The heat storage tank 17 provides heat in response to a hot-water supply demand. An inlet and an outlet of the heat storage tank 17 may respectively be provided with temperature sensors 51 and 52 that measure temperatures T1 and T2 of the heat medium. In addition to the temperature sensor 52 at the outlet of the heat storage tank 17, a temperature sensor 53 that measures a temperature T3 of the heat medium may be provided at a lower part of the heat storage tank 17. The temperature sensor 52 and the temperature sensor 53 may be used in a combined fashion. The outlet of the heat storage tank 17 may be provided with a flow rate sensor 61 that measures the flow rate of the heat medium. The inlet of the heat storage tank 17 may be provided with a flow rate sensor that measures a flow rate F 1 of the heat medium in place of the flow rate sensor 61.

The waste heat recovery line 18 causes the heat medium stored in the heat storage tank 17 to circulate between the fuel cell 16 and the heat storage tank 17. The waste heat recovery line 18 includes a heat-medium outflow line 18a, an exhaust-gas heat-exchange line 18b, a heat-medium cooling line 18c, a heat-medium heating line 18d, and a heat-medium inflow line 18f.

The waste heat recovery line 18 is capable of switching a passage of the heat medium to any one of the exhaust-gas heat-exchange line 18b, the heat-medium cooling line 18c, and the heat-medium heating line 18d between the heat-medium outflow line 18a and the heat-medium inflow line 18f, and is capable of changing the sequence in which the heat medium travels along a plurality lines among the exhaust-gas heat-exchange line 18b, the heat-medium cooling line 18c, and the heat-medium heating line 18d. A specific example of the connection configuration of the exhaust-gas heat-exchange line 18b, the heat-medium cooling line 18c, and the heat-medium heating line 18d in the waste heat recovery line 18 will be described below.

As an example of the aforementioned configuration that enables switching of the passage of the heat medium, the waste heat recovery line 18 may further include the first three-way valve 31, the second three-way valve 32, the third three-way valve 33, a first bypass flow path 19a, a second bypass flow path 19b, and a third bypass flow path 19c.

The heat-medium outflow line 18a causes the heat medium to flow out from the heat storage tank 17. The heat-medium outflow line 18a may include a first end connected to the heat storage tank 17 and a second end connected to the first three-way valve 31.

The exhaust-gas heat-exchange line 18b causes the exhaust gas of the fuel cell 16 and the heat medium to exchange heat with each other at the third heat exchange unit 20. The exhaust-gas heat-exchange line 18b may include a first end connected to the first three-way valve 31 and a second end connected to the second three-way valve 32.

The heat-medium cooling line 18c cools the heat medium. The heat-medium heating line 18d heats the heat medium. As will be described later, the heat-medium cooling line 18c and the heat-medium heating line 18d may be the same line or may be separate lines. In the following description, the heat-medium cooling line 18c and the heat-medium heating line 18d are the same line. In a common description between the heat-medium cooling line 18c and the heat-medium heating line 18d, the heat-medium cooling line 18c and the heat-medium heating line 18d are referred to as a temperature adjustment line 18e. The temperature adjustment line 18e may include a first end connected to the first three-way valve 31 and a second end connected to the third three-way valve 33.

The heat-medium inflow line 18f can cause the heat medium to recover the heat generated by the fuel cell 16 at the first heat exchange unit 19. The heat-medium inflow line 18f causes the heat medium to flow into the heat storage tank 17. The heat-medium inflow line 18f may include a first end connected to the heat storage tank 17 and a second end connected to the second three-way valve 32.

The waste heat recovery line 18 may be provided with the first pump 40. The first pump 40 may increase the pressure to cause the heat medium stored in the heat storage tank 17 to circulate.

As mentioned above, the first three-way valve 31 may be connected to the second end of the heat-medium outflow line 18a, the first end of the exhaust-gas heat-exchange line 18b, and the first end of the temperature adjustment line 18e. As mentioned above, the second three-way valve 32 may be connected to the second end of the exhaust-gas heat-exchange line 18b and the second end of the heat-medium inflow line 18f. The second three-way valve 32 may be connected to a first end of the first bypass flow path 19a. As mentioned above, the third three-way valve 33 may be connected to the second end of the temperature adjustment line 18e. The third three-way valve 33 may be connected to a first end of the second bypass flow path 19b and a first end of the third bypass flow path 19c.

As mentioned above, the first end of the first bypass flow path 19a may be connected to the second three-way valve 32. A second end opposite the first end of the first bypass flow path 19a may be connected to the temperature adjustment line 18e between the first three-way valve 31 and the burner 22, to be described later. As mentioned above, the first end of the second bypass flow path 19b may be connected to the third three-way valve 33. A second end opposite the first end of the second bypass flow path 19b may be connected to the exhaust-gas heat-exchange line 18b between the first three-way valve 31 and the third heat exchange unit 20. As mentioned above, the first end of the third bypass flow path 19c may be connected to the third three-way valve 33. A second end opposite the first end of the third bypass flow path 19c may be connected to the heat-medium inflow line 18f between the second three-way valve 32 and the first heat exchange unit 19.

In response to switching of the first to third three-way valves 31 to 33 and operation of the burner 22, the waste heat recovery line 18 is capable of switching the passage of the heat medium to any one of the exhaust-gas heat-exchange line 18b, the heat-medium cooling line 18c, and the heat-medium heating line 18d between the heat-medium outflow line 18a and the heat-medium inflow line 18f, or is capable of changing the sequence in which the heat medium travels along at least two of the exhaust-gas heat-exchange line 18b, the heat-medium cooling line 18c, and the heat-medium heating line 18d.

As illustrated in FIG. 6, the third heat exchange unit 20 causes the exhaust gas discharged from the fuel cell 16 and the heat medium circulating along the waste heat recovery line 18 to exchange heat with each other. The exhaust gas discharged from the fuel cell 16 is normally lower in temperature (e.g., about 200°C to 300°C) than the ambient temperature around the reformer 26 and the cell stack 27. Therefore, the third heat exchange unit 20 functions as a heat-medium preheater for the first heat exchange unit 19. A heat-medium inlet of the third heat exchange unit 20 may be provided with a temperature sensor 54 that measures a temperature T4 of the heat medium.

The heat-medium cooling line 18c may be cooled by a cooler provided nearby. The cooler is, for example, a radiator.

The heat-medium heating line 18d may be heated by a heater provided nearby. The heater is, for example, the burner 22 positioned close to the heat-medium heating line 18d and capable of heating the heat-medium heating line. Alternatively, the heater may be an electric heater or the like. The burner 22 has a fuel injection line that supplies gas fuel and an air supply line that supplies outside air by forcefully suctioning the outside air with a blower. The burner 22 mixes the gas fuel and the outside air and causes combustion thereof at an ignition port. The heat medium may be heated in accordance with the combustion of the burner 22.

As mentioned above, the heat-medium cooling line 18c and the heat-medium heating line 18d may be the temperature adjustment line 18e serving as the same line. In such a configuration, the cooler and the heater may be provided separately, or may be combined. As a configuration example where the cooler and the heater are combined, the burner 22 may be equipped with a blower. The temperature adjustment line 18e may include a fin pipe. The fin pipe may be heated by the burner 22 provided nearby. The fin pipe is heated in accordance with the combustion of the burner 22, whereby the heat medium is heated in the temperature adjustment line 18e. The blower blows air onto the fin pipe in a state where the supplying of raw fuel gas to the burner 22 is stopped, whereby the heat medium is cooled in the temperature adjustment line 18e. A temperature sensor 57 may be provided from an area where the burner 22 heats or cools the fin pipe toward, for example, the second end of the temperature adjustment line 18e.

In response to a hot-water supply demand, the indirect supply line 12 causes the heat medium and the medium supplied from, for example, the water supply to exchange heat with each other, so as to supply hot water to the consumer facility. The indirect supply line 12 may be supplied with the medium from, for example, the water supply. The medium is, for example, water. The indirect supply line 12 may be provided with the first flow-rate adjustment valve 43 that adjusts the supply amount of the medium. A flow rate sensor 62 that measures the flow rate of the medium may be provided upstream of the first flow-rate adjustment valve 43 in the indirect supply line 12. A temperature sensor 55 that measures a temperature T5 of the heat medium may be provided upstream of the first flow-rate adjustment valve 43 in the indirect supply line 12.

The indirect supply line 12 includes the second heat exchange unit 14. The second heat exchange unit 14 may cause the medium and the heat medium stored in the heat storage tank 17 to exchange heat with each other in response to a hot-water supply demand. The indirect supply line 12 supplies hot water to, for example, the consumer facility. In other words, the indirect supply line 12 may be a hot-water supply path. The indirect supply line 12 may be provided with the bypass path 44 bypassing the second heat exchange unit 14. The bypass path 44 may be provided with the second flow-rate adjustment valve 45. By using the second flow-rate adjustment valve 45 to adjust the flow rate of the medium bypassed to the bypass path 44, the temperature of the medium fed from the indirect supply line 12 may be adjusted. In the indirect supply line 12, a temperature sensor 56 that measures a temperature T6 of the heat medium may be provided beyond a merging point between the downstream side of the second heat exchange unit 14 and the bypass path 44.

In accordance with the operational state of the fuel cell 16 and whether or not there is a hot-water supply demand to the heat storage tank 17, the control device 35 switches the travel path of the heat medium in the waste heat recovery line 18. Examples of the switching will be described below. The control device 35 may further switch the travel path of the heat medium based on the temperature measured by the temperature sensor 53 at the lower part of the heat storage tank 17.

When the fuel cell 16 is in operation, the control device 35 may switch the travel path of the heat medium in the waste heat recovery line 18 in accordance with the relationship between the temperature T3 at the lower part of the heat storage tank 17 and a temperature threshold value. A first temperature threshold value Th1 serving as the temperature threshold value when there is no hot-water supply demand may be lower than a second temperature threshold value Th2 serving as the temperature threshold value when there is a hot-water supply demand. The first temperature threshold value Th1 is, for example, 30°C. The second temperature threshold value Th2 is, for example, 40°C. The switching of the travel path during operation of the fuel cell 16 will be described below.

When there is no hot-water supply demand and the temperature T3 at the lower part of the heat storage tank 17 is equal to or lower than the first temperature threshold value Th1, the control device 35 may perform first control. In the first control, the waste heat recovery line 18 is switched such that the heat medium travels along the exhaust-gas heat-exchange line 18b alone.

Specific behavior in the first control will be described below with reference to FIG. 6. The control device 35 controls the first three-way valve 31 so as to cause the second end of the heat-medium outflow line 18a and the first end of the exhaust-gas heat-exchange line 18b to communicate with each other. The control device 35 controls the second three-way valve 32 so as to cause the second end of the exhaust-gas heat-exchange line 18b and the second end of the heat-medium inflow line 18f to communicate with each other. The control device 35 controls the third three-way valve 33 so as to not to connect the first end of the third bypass flow path 19c and the first end of the second bypass flow path 19b to each other. The control device 35 may control the third three-way valve 33 so as to cause the second end of the temperature adjustment line 18e and the first end of the second bypass flow path 19b or the first end of the third bypass flow path 19c to communicate with each other. The control device 35 stops the combustion of the burner 22 and stops the blower of the burner 22. The control device 35 stops the second pump 41.

In the state where the first control is performed, the heat medium from the heat storage tank 17 flows sequentially along the heat-medium outflow line 18a, the exhaust-gas heat-exchange line 18b, and the heat-medium inflow line 18f. At the third heat exchange unit 20 of the exhaust-gas heat-exchange line 18b, the heat medium is heated by exchanging heat with the exhaust gas discharged from the fuel cell 16. At the first heat exchange unit 19 of the heat-medium inflow line 18f, the heat medium exchanges heat with the fuel cell 16. Hence, the heat medium is further heated. Subsequently, the heat medium flows to the heat storage tank 17.

When there is no hot-water supply demand and the temperature T3 at the lower part of the heat storage tank 17 is higher than the first temperature threshold value Th1, the control device 35 may perform second control. In the second control, the waste heat recovery line 18 is switched such that the heat medium travels sequentially along the heat-medium outflow line 18a, the heat-medium cooling line 18c, and the exhaust-gas heat-exchange line 18b.

Specific behavior in the second control will be described below. The control device 35 controls the first three-way valve 31 so as to cause the second end of the heat-medium outflow line 18a and the first end of the heat-medium cooling line 18c (temperature adjustment line 18e) to communicate with each other. The control device 35 controls the second three-way valve 32 so as to cause the second end of the exhaust-gas heat-exchange line 18b and the second end of the heat-medium inflow line 18f to communicate with each other. The control device 35 controls the third three-way valve 33 so as to cause the second end of the heat-medium cooling line 18c and the first end of the second bypass flow path 19b to communicate with each other. The control device 35 activates the blower of the burner 22 while stopping the combustion of the burner 22, so as to cause the temperature adjustment line 18e to function as the heat-medium cooling line 18c. In view of an amount of heat that can be acquired from heat exchange between the heat medium and the fuel cell 16, the control device 35 may adjust the amount of air to the burner 22 such that a temperature T7 measured by the temperature sensor 57 becomes a predetermined first temperature target value Tt1. After flowing along the heat-medium cooling line 18c, the heat medium flows sequentially along the exhaust-gas heat-exchange line 18b and the heat-medium inflow line 18f. In view of an amount of heat that can be acquired from heat exchange in the exhaust-gas heat-exchange line 18b after the heat medium flows along the heat-medium cooling line 18c, the first temperature target value Tt1 may be set to be lower than a second temperature target value Tt2 or a third temperature target value Tt3 in third control or fifth control. In the third control or the fifth control, the heat medium flowing along the temperature adjustment line 18e has already passed the exhaust-gas heat-exchange line 18b.

In the state where the second control is performed, the heat medium from the heat storage tank 17 flows to the heat-medium cooling line 18c via the heat-medium outflow line 18a. The blower of the burner 22 suctions the outside air and blows the outside air to the heat-medium cooling line 18c, so as to cool the heat medium flowing along the heat-medium cooling line 18c. Subsequently, the heat medium flows sequentially along the exhaust-gas heat-exchange line 18b and the heat-medium inflow line 18f.

When the fuel cell 16 is in operation and there is a hot-water supply demand, the control device 35 may switch the travel path of the heat medium in the waste heat recovery line 18 based on an inflow heat amount as an amount of heat of the heat medium flowing into the heat storage tank 17 and a provided heat amount as an amount of heat provided by the heat storage tank 17 in response to the hot-water supply demand. The switching of the travel path when the fuel cell 16 is in operation and there is a hot-water supply demand will be described below. With regard to the switching of the travel path based on the inflow heat amount and the provided heat amount, the control device 35 may perform the switching also based on the temperature T3 at the lower part of the heat storage tank 17.

The inflow heat amount may be calculated based on temperatures T1 and T2 of the heat medium at the inlet and the outlet of the heat storage tank 17 and the flow rate F1 of the heat medium. Temperature sensors 51 and 52 that measure the temperatures T1 and T2 of the heat medium at the inlet and the outlet of the heat storage tank 17 may be provided. The flow rate sensor 61 that measures the flow rate F1 of the heat medium at the outlet of the heat storage tank 17 may be provided. A flow rate sensor that measures the flow rate F1 of the heat medium at the inlet of the heat storage tank 17 may be provided in place of the flow rate sensor 61.

An outflow heat amount may be calculated based on the amount of water input to the indirect supply line 12 and the temperatures of the medium at the inlet and the outlet of the indirect supply line 12. The flow rate sensor 62 that measures the amount of water input to the indirect supply line 12 may be provided. The temperature sensors 55 and 56 that measure the temperatures of the medium at the inlet and the outlet of the indirect supply line 12 may be provided.

The control device 35 may perform the third control when the temperature T3 at the lower part of the heat storage tank 17 is equal to or lower than a third temperature threshold value and the inflow heat amount is smaller than the provided heat amount. In the configuration where the temperature threshold value is changed based on whether or not there is a hot-water supply demand, as described above, a third temperature threshold value Th3 may be the same as the second temperature threshold value Th2. In the third control, the waste heat recovery line 18 is switched such that the heat medium travels along at least the heat-medium heating line 18d (temperature adjustment line 18e). As described below, in the third control, the heat medium may travel along the exhaust-gas heat-exchange line 18b before traveling along the heat-medium heating line 18d.

Behavior in the third control will be described below. The control device 35 controls the first three-way valve 31 so as to cause the second end of the heat-medium outflow line 18a and the first end of the exhaust-gas heat-exchange line 18b to communicate with each other. The control device 35 controls the second three-way valve 32 so as to cause the second end of the exhaust-gas heat-exchange line 18b and the first end of the first bypass flow path 19a to communicate with each other. The control device 35 controls the third three-way valve 33 so as to cause the second end of the heat-medium heating line 18d and the first end of the third bypass flow path 19c to communicate with each other. The control device 35 causes combustion of the burner 22 so as to cause the temperature adjustment line 18e to function as the heat-medium heating line 18d. The control device 35 activates the second pump 41 so as to cause the heat medium to flow to the second heat exchange unit 14. In view of the amount of heat that can be acquired from heat exchange between the heat medium and the fuel cell 16, the control device 35 may adjust the amount of raw fuel gas to the burner 22 such that the temperature T7 measured by the temperature sensor 57 becomes the predetermined second temperature target value Tt2. After flowing along the heat-medium heating line 18d, the heat medium flows along the heat-medium inflow line 18f. In view of the amount of heat that can be acquired from heat exchange by the heat medium in the heat-medium inflow line 18f, the second temperature target value Tt2 may be set to be lower than a fifth temperature target value Tt5 or a sixth temperature target value Tt6 in seventh control or eighth control, to be described later. The second temperature target value Tt2 may be set such that the temperature of the heat medium after the heat medium exchanges heat with the fuel cell 16 in the heat-medium inflow line 18f becomes the fifth temperature target value Tt5 or the sixth temperature target value Tt6. In the seventh control or the eighth control, a change in the temperature of the heat medium in the heat-medium inflow line 18f is small since the fuel cell 16 is in a stopped state.

In the state where the third control is performed, the heat medium from the heat storage tank 17 flows sequentially along the heat-medium outflow line 18a, the exhaust-gas heat-exchange line 18b, the heat-medium heating line 18d, and the heat-medium inflow line 18f. The burner 22 undergoes combustion and heats the heat medium flowing along the heat-medium heating line 18d. The medium flowing along the indirect supply line 12 is heated by exchanging heat with the heat medium at the second heat exchange unit 14.

When the temperature T3 at the lower part of the heat storage tank 17 is equal to or lower than a fourth temperature threshold value Th4 and the inflow heat amount is larger than the provided heat amount, or when the temperature T3 at the lower part of the heat storage tank 17 is higher than the fourth temperature threshold value Th4 and the inflow heat amount is smaller than the provided heat amount, the control device 35 may perform fourth control. In the configuration where the temperature threshold value is changed based on whether or not there is a hot-water supply demand, as described above, the fourth temperature threshold value Th4 may be the same as the second temperature threshold value Th2. Alternatively, in the configuration where the third control is performed based on a comparison with the temperature T3 at the lower part of the heat storage tank 17, as described above, the fourth temperature threshold value Th4 may be the same as the third temperature threshold value Th3. In the fourth control, the waste heat recovery line 18 is switched such that the heat medium travels sequentially along the heat-medium outflow line 18a and the exhaust-gas heat-exchange line 18b. In the fourth control, the waste heat recovery line 18 may be switched such that the heat medium travels along the exhaust-gas heat-exchange line 18b alone between the heat-medium outflow line 18a and the heat-medium inflow line 18f.

Behavior in the fourth control will be described below. The control device 35 controls the first three-way valve 31 so as to cause the second end of the heat-medium outflow line 18a and the first end of the exhaust-gas heat-exchange line 18b to communicate with each other. The control device 35 controls the second three-way valve 32 so as to cause the second end of the exhaust-gas heat-exchange line 18b and the second end of the heat-medium inflow line 18f to communicate with each other. The control device 35 controls the third three-way valve 33 so as not to connect the first end of the third bypass flow path 19c and the first end of the second bypass flow path 19b to each other. The control device 35 may control the third three-way valve 33 so as to cause the second end of the temperature adjustment line 18e and the first end of the second bypass flow path 19b or the first end of the third bypass flow path 19c to communicate with each other. The control device 35 stops the combustion of the burner 22 and stops the blower of the burner 22. The control device 35 activates the second pump 41 so as to cause the heat medium to flow to the second heat exchange unit 14.

In the state where the fourth control is performed, the heat medium from the heat storage tank 17 flows sequentially along the heat-medium outflow line 18a, the exhaust-gas heat-exchange line 18b, and the heat-medium inflow line 18f. At the third heat exchange unit 20 of the exhaust-gas heat-exchange line 18b, the heat medium is heated by exchanging heat with the exhaust gas discharged from the fuel cell 16. At the first heat exchange unit 19 of the heat-medium inflow line 18f, the heat medium exchanges heat with the fuel cell 16. Hence, the heat medium is further heated. Subsequently, the heat medium flows to the heat storage tank 17. The medium flowing along the indirect supply line 12 is heated by exchanging heat with the heat medium at the second heat exchange unit 14.

When the temperature T3 at the lower part of the heat storage tank 17 is higher than a fifth temperature threshold value Th5 and the inflow heat amount is larger than the provided heat amount, the switching of the travel path by the control device 35 based on the inflow heat amount and the provided heat amount may be based on the water amount W in the condensed water tank of the fuel cell system 11. In detail, the control device 35 may change the sequence in which the heat medium travels along the exhaust-gas heat-exchange line 18b and the heat-medium cooling line 18c in the waste heat recovery line 18 in accordance with the water amount W in the condensed water tank of the fuel cell system 11. In the configuration where the temperature threshold value is changed based on whether or not there is a hot-water supply demand, as described above, the fifth temperature threshold value Th5 may be the same as the second temperature threshold value Th2. Alternatively, in the configuration where the third control or the fourth control is performed based on a comparison with the temperature T3 at the lower part of the heat storage tank 17, as described above, the fifth temperature threshold value Th5 may be the same as the third temperature threshold value Th3 or the fourth temperature threshold value Th4. The following description relates to the switching of the travel path when the temperature T3 at the lower part of the heat storage tank 17 is higher than the fifth temperature threshold value Th5 and the inflow heat amount is larger than the provided heat amount.

When the water amount W in the condensed water tank of the fuel cell system 11 is larger than a first water-amount threshold value W1, the control device 35 may perform the fifth control. In the fifth control, the waste heat recovery line 18 is switched such that the heat medium travels along the exhaust-gas heat-exchange line 18b and subsequently travels along the heat-medium cooling line 18c (temperature adjustment line 18e). With regard to the first water-amount threshold value W1, for example, the condensed water tank may be provided with a water level sensor, and the control device 35 may determine the water amount W in the condensed water tank based on detection by this water level sensor. For example, the first water-amount threshold value may be appropriately set between 50% and 80% of the capacity of the condensed water tank.

Behavior in the fifth control will be described below. The control device 35 controls the first three-way valve 31 so as to cause the second end of the heat-medium outflow line 18a and the first end of the exhaust-gas heat-exchange line 18b to communicate with each other. The control device 35 controls the second three-way valve 32 so as to cause the second end of the exhaust-gas heat-exchange line 18b and the first end of the first bypass flow path 19a to communicate with each other. The control device 35 controls the third three-way valve 33 so as to cause the second end of the heat-medium cooling line 18c and the first end of the third bypass flow path 19c to communicate with each other. The control device 35 activates the blower of the burner 22 while stopping the combustion of the burner 22. The control device 35 activates the second pump 41 so as to cause the heat medium to flow to the second heat exchange unit 14. In view of the amount of heat that can be acquired from heat exchange between the heat medium and the fuel cell 16, the control device 35 may adjust the amount of air to the burner 22 such that the temperature T7 measured by the temperature sensor 57 becomes the third temperature target value Tt3. The third temperature target value Tt3 may be the same as the second temperature threshold value Th2. The third temperature target value Tt3 may be smaller than the second temperature threshold value Th2.

In the state where the fifth control is performed, the heat medium from the heat storage tank 17 flows sequentially along the heat-medium outflow line 18a, the exhaust-gas heat-exchange line 18b, the heat-medium cooling line 18c, and the heat-medium inflow line 18f. The blower of the burner 22 suctions the outside air and blows the outside air to the heat-medium cooling line 18c, so as to cool the heat medium flowing along the heat-medium cooling line 18c, whereby the temperature adjustment line 18e functions as the heat-medium cooling line 18c. The medium flowing along the indirect supply line 12 is heated by exchanging heat with the heat medium at the second heat exchange unit 14.

The control device 35 may perform sixth control when the water amount W in the condensed water tank of the fuel cell system 11 is smaller than a second water-amount threshold value W2. In the configuration where the fifth control is performed based on a comparison with the water amount W in the condensed water tank, as described above, the second water-amount threshold value W2 may be the same as the first water-amount threshold value W1. In the sixth control, the waste heat recovery line 18 is switched such that the heat medium travels along the heat-medium cooling line 18c (temperature adjustment line 18e) and subsequently travels along the exhaust-gas heat-exchange line 18b.

Behavior in the sixth control will be described below. The control device 35 controls the first three-way valve 31 so as to cause the second end of the heat-medium outflow line 18a and the first end of the heat-medium cooling line 18c to communicate with each other. The control device 35 controls the second three-way valve 32 so as to cause the second end of the exhaust-gas heat-exchange line 18b and the second end of the heat-medium inflow line 18f to communicate with each other. The control device 35 controls the third three-way valve 33 so as to cause the second end of the heat-medium cooling line 18c and the first end of the second bypass flow path 19b to communicate with each other. The control device 35 activates the blower of the burner 22 while stopping the combustion of the burner 22, so as to cause the temperature adjustment line 18e to function as the heat-medium cooling line 18c. The control device 35 activates the second pump 41 so as to cause the heat medium to flow to the second heat exchange unit 14. In view of the amount of heat that can be acquired from heat exchange between the heat medium and the fuel cell 16, the control device 35 may adjust the amount of air to the burner 22 such that the temperature T7 measured by the temperature sensor 57 becomes a predetermined fourth temperature target value Tt4. After flowing along the heat-medium cooling line 18c, the heat medium flows sequentially along the exhaust-gas heat-exchange line 18b and the heat-medium inflow line 18f. In view of the amount of heat that can be acquired from heat exchange by the heat medium in the exhaust-gas heat-exchange line 18b and the heat-medium inflow line 18f, the fourth temperature target value Tt4 may be set to be lower than the second temperature target value Tt2 or the third temperature target value Tt3.

In the state where the sixth control is performed, the heat medium from the heat storage tank 17 flows to the heat-medium cooling line 18c via the heat-medium outflow line 18a. The blower of the burner 22 suctions the outside air and blows the outside air to the heat-medium cooling line 18c, so as to cool the heat medium flowing along the heat-medium cooling line 18c. Subsequently, the heat medium flows sequentially along the exhaust-gas heat-exchange line 18b and the heat-medium inflow line 18f. The medium flowing along the indirect supply line 12 is heated by exchanging heat with the heat medium at the second heat exchange unit 14.

When the fuel cell 16 is stopped and there is no hot-water supply demand and when the temperature T3 at the lower part of the heat storage tank 17 is equal to or lower than a seventh temperature threshold value Th7, the control device 35 may perform the seventh control. In the configuration where the temperature threshold value is changed based on whether or not there is a hot-water supply demand, as described above, the seventh temperature threshold value Th7 may be the same as the first temperature threshold value Th1. In the seventh control, the aforementioned waste heat recovery line is switched such that the heat medium travels sequentially along the exhaust-gas heat-exchange line 18b and the heat-medium heating line 18d.

Behavior in the seventh control will be described below. The control device 35 controls the first three-way valve 31 so as to cause the second end of the heat-medium outflow line 18a and the first end of the exhaust-gas heat-exchange line 18b to communicate with each other. The control device 35 controls the second three-way valve 32 so as to cause the second end of the exhaust-gas heat-exchange line 18b and the first end of the first bypass flow path 19a to communicate with each other. The control device 35 controls the third three-way valve 33 so as to cause the second end of the heat-medium heating line 18d and the first end of the third bypass flow path 19c to communicate with each other. The control device 35 causes combustion of the burner 22 so as to cause the temperature adjustment line 18e to function as the heat-medium heating line 18d. The control device 35 stops the second pump 41. The control device 35 may adjust the amount of raw fuel gas to the burner 22 and the speed of the pump 40 so that the temperature T7 measured by the temperature sensor 57 becomes the predetermined fifth temperature target value Tt5. The fifth temperature target value Tt5 is, for example, 75°C.

In the state where the seventh control is performed, the heat medium from the heat storage tank 17 flows sequentially along the heat-medium outflow line 18a, the exhaust-gas heat-exchange line 18b, the heat-medium heating line 18d, and the heat-medium inflow line 18f. The burner 22 undergoes combustion and heats the heat medium flowing along the heat-medium heating line 18d.

When the temperature of the fuel cell 16 is higher than the seventh temperature threshold value Th7 and lower than a tenth temperature threshold value Th10, the control device 35 may switch the waste heat recovery line 18 such that the heat medium travels sequentially along the heat-medium outflow line 18a and the heat-medium heating line 18d (temperature adjustment line 18e), in place of the seventh control described above. By performing this switching, the heat medium can circulate more quickly along the waste heat recovery line 18. Hence, the heat medium may be heated more quickly.

When the fuel cell 16 is stopped and there is a hot-water supply demand and when the temperature T3 at the lower part of the heat storage tank 17 is equal to or lower than an eighth temperature threshold value Th8, the control device 35 may switch the waste heat recovery line 18 such that the heat medium travels along the heat-medium heating line 18d (temperature adjustment line 18e) alone. The eighth temperature threshold value Th8 may be higher than the second temperature threshold value Th2. The eighth temperature threshold value Th8 is, for example, 50°C.

Behavior in the eighth control will be described below. The control device 35 controls the first three-way valve 31 so as to cause the second end of the heat-medium outflow line 18a and the first end of the heat-medium heating line 18d to communicate with each other. The control device 35 controls the second three-way valve 32 so as not to connect the second end of the heat-medium inflow line 18f and the first end of the first bypass flow path 19a to each other. The control device 35 may control the second three-way valve 32 so as to cause the second end of the exhaust-gas heat-exchange line 18b and the second end of the heat-medium inflow line 18f to communicate with each other. The control device 35 controls the third three-way valve 33 so as to cause the second end of the heat-medium heating line 18d and the first end of the third bypass flow path 19c to communicate with each other. The control device 35 causes combustion of the burner 22 so as to cause the temperature adjustment line 18e to function as the heat-medium heating line 18d. The control device 35 may adjust the amount of raw fuel gas to the burner 22 such that the temperature T7 measured by the temperature sensor 57 becomes the predetermined sixth temperature target value Tt6. In the configuration where the seventh control is performed, as described above, the sixth temperature target value Tt6 may be the same as the fifth temperature target value Tt5. The control device 35 activates the second pump 41 so as to cause the heat medium to flow to the second heat exchange unit 14.

In the state where the eighth control is performed, the heat medium from the heat storage tank 17 flows sequentially along the heat-medium outflow line 18a, the heat-medium heating line 18d, and the heat-medium inflow line 18f. The burner 22 undergoes combustion and heats the heat medium flowing along the heat-medium heating line 18d. The medium flowing along the indirect supply line 12 is heated by exchanging heat with the heat medium at the second heat exchange unit 14.

In addition to the switching of the waste heat recovery line described above, for example, the control device 35 may periodically perform control to be described below. This control may be performed at any time, or may be performed together with the second and/or sixth control. When the temperature T4 at the heat-medium inlet of the third heat exchange unit 20 is equal to or higher than a sixth temperature threshold value Th6 and the water amount W in the condensed water tank of the fuel cell system 11 is equal to or smaller than a third water-amount threshold value W3, the control device 35 may reduce the amount of electricity generated by the fuel cell 16. The sixth temperature threshold value Th6 is, for example, 50°C. In the configuration where the fifth control or the sixth control is performed based on a comparison with the water amount W in the condensed water tank, as mentioned above, the third water-amount threshold value W3 may be the same as the first water-amount threshold value W1 or the second water-amount threshold value W2. In detail, the control device 35 may decrease the amount of electricity generated by the fuel cell 16 by reducing the amount of raw fuel gas or air supplied to the fuel cell 16.

When the temperature T3 at the lower part of the heat storage tank 17 is equal to or lower than a ninth temperature threshold value Th9, the control device 35 may limit the heat providing capability of the heat storage tank 17. In the configuration where the temperature threshold value is changed based on whether or not there is a hot-water supply demand, as described above, the ninth temperature threshold value Th9 may be the same as the second temperature threshold value Th2. In the configuration where the third control, the fourth control, the fifth control, or the sixth control is performed based on a comparison with the temperature T3 at the lower part of the heat storage tank 17, as described above, the ninth temperature threshold value Th9 may be the same as the third temperature threshold value Th3, the fourth temperature threshold value Th4, or the fifth temperature threshold value Th5. In detail, the control device 35 may control the first flow-rate adjustment valve 43 in the indirect supply line 12 so as to adjust the supply amount of the medium.

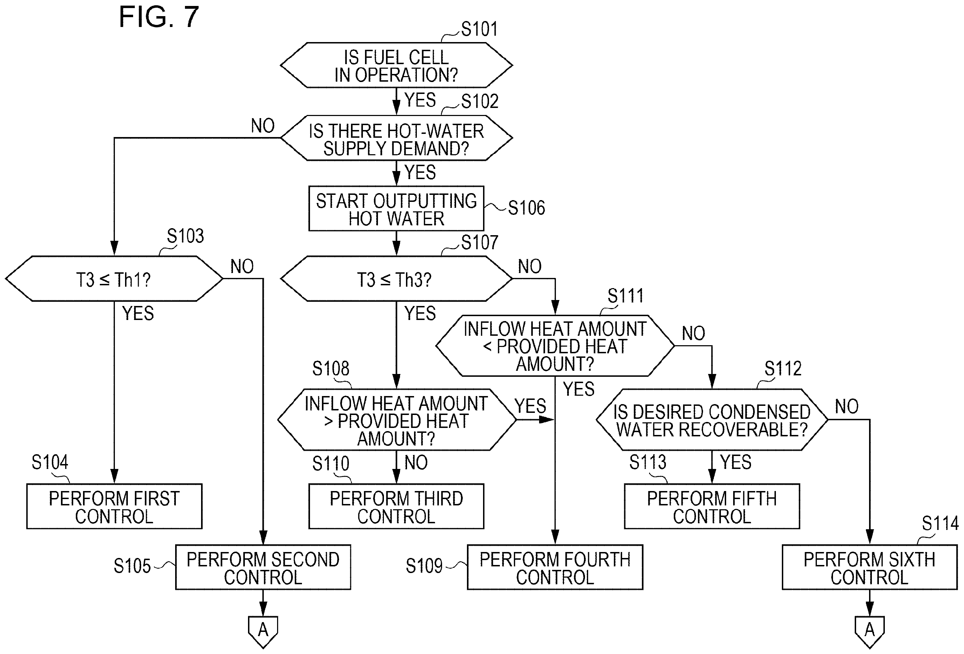

A process executed by the control device 35 in this embodiment will be described below with reference to flowcharts in FIG. 7 to FIG. 9. The control device 35 may execute this process in fixed cycles.

Referring to FIG. 7, when the fuel cell is in operation (step S101) and there is no hot-water supply demand (step S102), the control device 35 determines whether the temperature T3 at the lower part of the heat storage tank 17 is equal to or lower than the first temperature threshold value Th1 (step S103). If the control device 35 determines that the temperature T3 at the lower part of the heat storage tank 17 is equal to or lower than the first temperature threshold value Th1, the control device 35 performs the first control (step S104). If the control device 35 determines that the temperature T3 at the lower part of the heat storage tank 17 is not equal to or lower than the first temperature threshold value Th1, the control device 35 performs the second control (step S105).

When the fuel cell is in operation (step S101) and there is a hot-water supply demand (step S102), the control device 35 starts outputting hot water (step S106). In detail, the control device 35 activates the second pump 41 so as to cause the heat medium to flow to the second heat exchange unit 14. The control device 35 determines whether the temperature T3 at the lower part of the heat storage tank 17 is equal to or lower than the third temperature threshold value Th3 (second temperature threshold value Th2 or fourth temperature threshold value Th4) (step S 107). If the control device 35 determines that the temperature T3 at the lower part of the heat storage tank 17 is equal to or lower than the third temperature threshold value Th3, it is determined whether the inflow heat amount is larger than the provided heat amount (step S108). If the control device 35 determines that the inflow heat amount is larger than the provided heat amount, the control device 35 performs the fourth control (step S109). If the control device 35 determines that the inflow heat amount is not larger than the provided heat amount, the control device 35 performs the third control (step S110).

If the control device 35 determines in step S107 that the temperature T3 at the lower part of the heat storage tank 17 is higher than the third temperature threshold value Th3 (fifth temperature threshold value Th5), it is determined whether the inflow heat amount is smaller than the provided heat amount (step S111). If the control device 35 determines that the inflow heat amount is smaller than the provided heat amount, the control device 35 performs the fourth control described above (step S109). If the control device 35 determines that the inflow heat amount is not smaller than the provided heat amount, the control device 35 determines whether desired condensed water is recoverable (step S112).

In an example of the determination performed in step S112, the temperature sensor 54 measures the temperature T4 at the heat-medium inlet of the third heat exchange unit 20. If the temperature T4 is lower than the sixth temperature threshold value Th6, the control device 35 determines that the desired condensed water is recoverable. In another example, the control device 35 may determine whether the water amount W in the condensed water tank storing the condensed water occurring at the third heat exchange unit 20 is equal to or larger than the first water-amount threshold value W1 (second water-amount threshold value W2 or third water-amount threshold value W3). The water amount W in the condensed water tank may be measured by the water level sensor. The water amount W in the condensed water tank may be calculated based on measurement values of the inflow amount and the outflow amount of the heat medium to and from the condensed water tank. The water amount W in the condensed water tank may be calculated based on the temperature of the exhaust gas of the fuel cell 16.

If the control device 35 determines that the desired condensed water is recoverable, the control device 35 performs the fifth control (step S113). If the control device 35 determines that the desired condensed water is not recoverable, the control device 35 performs the sixth control (step S114).

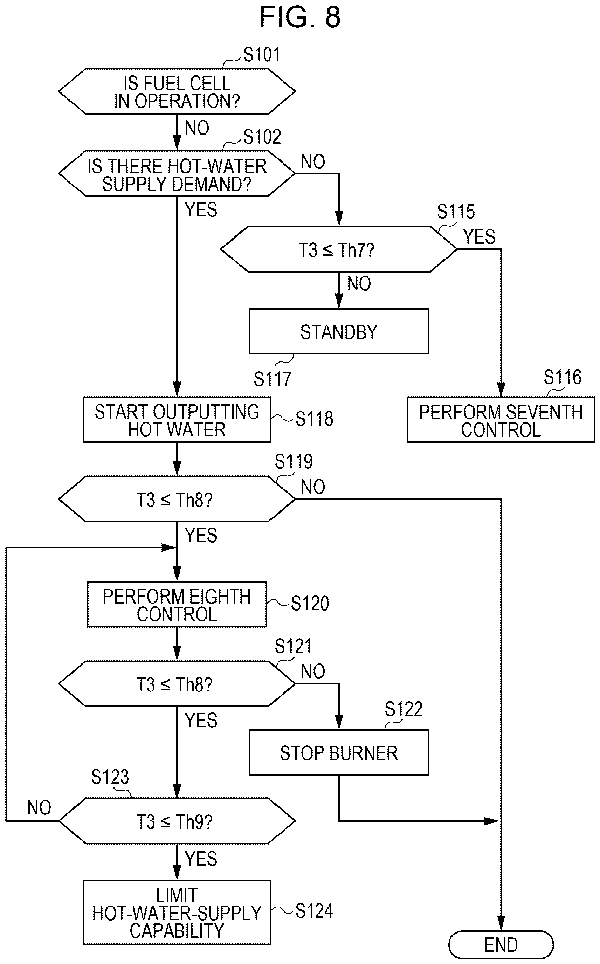

Referring to FIG. 8, when the fuel cell is in operation (step S101) and there is no hot-water supply demand (step S102), the control device 35 determines whether the temperature T3 at the lower part of the heat storage tank 17 is equal to or lower than the seventh temperature threshold value Th7 (see step S115). If the control device 35 determines that the temperature T3 at the lower part of the heat storage tank 17 is equal to or lower than the seventh temperature threshold value Th7, the control device 35 performs the seventh control (step S116). If the control device 35 determines that the temperature T3 at the lower part of the heat storage tank 17 is not equal to or lower than the seventh temperature threshold value Th7, the control device 35 causes the fuel cell system 11 to transition to a standby mode (step S117). The standby mode refers to a state where the fuel cell 16 is not in operation, the heat storage tank 17 is not providing heat, the burner 22 is not supplied with fuel gas, the blower of the burner 22 is not blowing air, and the first pump 40 is stopped.

When the fuel cell is in operation (step S101) and there is a hot-water supply demand (step S102), the control device 35 starts outputting hot water (step S118). In detail, the control device 35 activates the second pump 41 so as to cause the heat medium to flow to the second heat exchange unit 14. The control device 35 determines whether the temperature T3 at the lower part of the heat storage tank 17 is equal to or lower than the eighth temperature threshold value Th8 (step S119). If the control device 35 determines that the temperature T3 at the lower part of the heat storage tank 17 is equal to or lower than the eighth temperature threshold value Th8, the control device 35 performs the eighth control (step S120). If the control device 35 determines that the temperature T3 at the lower part of the heat storage tank 17 is not equal to or lower than the eighth temperature threshold value Th8, the control device 35 ends the process.

In the eighth control, the control device 35 may perform additional control, to be described below, in, for example, a periodical fashion. The control device 35 determines whether the temperature T3 at the lower part of the heat storage tank 17 is equal to or lower than the eighth temperature threshold value Th8 (step S121). If the control device 35 determines in step S110 that the temperature T3 at the lower part of the heat storage tank 17 is higher than the eighth temperature threshold value Th8, the control device 35 stops supplying gas fuel to the burner 22 (step S122). As a result, the amount by which the heat medium is heated in the waste heat recovery line 18 decreases. The control device 35 may stop the first pump 40. The control device 35 ends the process.

If the control device 35 determines in step S121 that the temperature T3 at the lower part of the heat storage tank 17 is equal to or lower than the eighth temperature threshold value Th8, the control device 35 further determines whether the temperature T3 at the lower part of the heat storage tank 17 is equal to or lower than the ninth temperature threshold value Th9 (step S123). When the control device 35 determines that the temperature T3 at the lower part of the heat storage tank 17 is equal to or lower than the ninth temperature threshold value Th9, the control device 35 limits the heat providing capability of the heat storage tank 17 (step S124). As mentioned above, the control device 35 may control the first flow-rate adjustment valve 43 in the indirect supply line 12 to adjust the supply amount of the medium. When the control device 35 determines that the temperature T3 at the lower part of the heat storage tank 17 is higher than the ninth temperature threshold value Th9, the control device 35 ends the additional control.

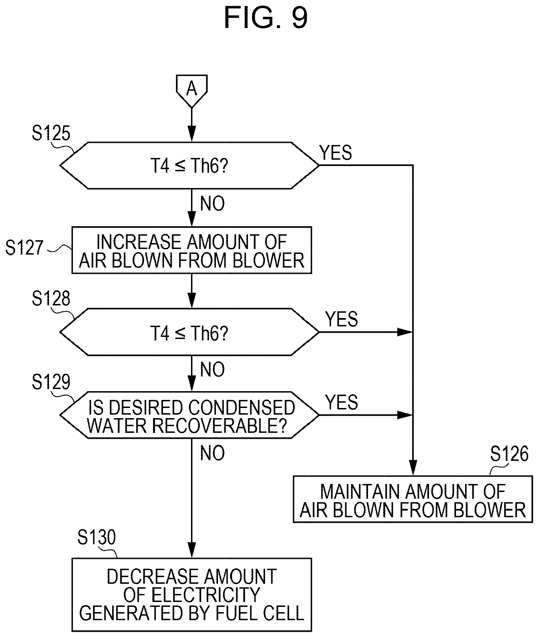

The control device 35 may further perform control to be described below with reference to FIG. 9 in, for example, a periodical fashion. This control may be performed at any time, or may be performed together with the second or sixth control. The control device 35 determines whether the temperature T4 at the heat-medium inlet of the third heat exchange unit 20 is equal to or lower than the sixth temperature threshold value Th6 (step S125). If the control device 35 determines in step S125 that the temperature T4 at the lower part of the heat storage tank 17 is equal to or lower than the sixth temperature threshold value Th6, the amount of air blown from the blower of the burner 22 is maintained (step S126). If the control device 35 determines that the temperature T4 at the lower part of the heat storage tank 17 is not equal to or lower than the sixth temperature threshold value Th6, the amount of air blown from the blower of the burner 22 is increased (step S127). The amount of air blown from the blower of the burner 22 may be increased by increasing the amount of rotation of the blower.

After a predetermined time period elapses from step S127, the control device 35 determines whether the temperature T4 at the heat-medium inlet of the third heat exchange unit 20 is equal to or lower than the sixth temperature threshold value Th6 (step S128). If the control device 35 determines that the temperature T4 at the heat-medium inlet of the third heat exchange unit 20 is equal to or lower than the sixth temperature threshold value Th6, the control device 35 maintains the amount of air blown from the blower of the burner 22 (step S126). If the control device 35 determines that the temperature T4 at the heat-medium inlet of the third heat exchange unit 20 is not equal to or lower than the sixth temperature threshold value Th6, the control device 35 determines whether the desired condensed water is recoverable, as described above (step S129).

If the control device 35 determines in step S129 that the desired condensed water is recoverable, the control device 35 maintains the amount of air blown from the blower of the burner 22 (step S126). If the control device 35 determines that the desired condensed water is not recoverable, the control device 35 decreases the amount of electricity generated by the fuel cell 16 (step S130). In detail, the control device 35 decreases the amount of electricity generated by the fuel cell 16 by reducing the amount of raw fuel gas or air supplied to the fuel cell 16.

The fuel cell system according to this embodiment having the above-described configuration includes the waste heat recovery line 18 that causes the heat medium to circulate between the fuel cell 16 and the heat storage tank 17. The waste heat recovery line 18 is capable of switching the passage of the heat medium to any one of the exhaust-gas heat-exchange line 18b, the heat-medium cooling line 18c, and the heat-medium heating line 18d between the heat-medium outflow line 18a and the heat-medium inflow line 18f, or is capable of changing the sequence in which the heat medium travels along at least two of the exhaust-gas heat-exchange line 18b, the heat-medium cooling line 18c, and the heat-medium heating line 18d. The control device 35 switches the travel path of the heat medium in the waste heat recovery line 18 in accordance with the operational state of the fuel cell 16 and whether or not there is a hot-water supply demand.

In a typical fuel cell system using a fuel cell, the waste heat is recovered by causing the exhaust gas of the fuel cell and the medium to exchange heat with each other. However, sufficient heating of the medium is difficult, and temporary supplying of a large amount of hot water is difficult. In a fuel cell system that recovers the waste heat from the exhaust gas and in which temporary supplying of a large amount of heat is difficult, a water heater is required to meet the demand for temporarily supplying the large amount of heat. In contrast, in the fuel cell system 11 according to this embodiment having the above-described configuration, both the reformer 26 and the cell stack 27 normally operate at a higher temperature than the exhaust gas, so that a large amount of heat may be recovered, as compared with the configuration that recovers the waste heat from the exhaust gas. The fuel cell system 11 has the heat storage tank 17 storing the heat medium. The heat medium may accumulate a large amount of heat. Therefore, the fuel cell 16 may temporarily supply a large amount of medium. Hence, a water heater does not need to be installed in the fuel cell system 11. Consequently, the fuel cell system 11 may be reduced in size.

By having the above-described configuration, the fuel cell system 11 according to this embodiment may increase the temperature of the heat medium stored in the heat storage tank 17 while appropriately activating the fuel cell 16 in accordance with the operational state of the fuel cell 16 and a hot-water supply demand.

In the fuel cell system 11 according to this embodiment, when the fuel cell 16 is in operation, the control device 35 switches the travel path of the heat medium in the waste heat recovery line 18 in accordance with the relationship between the temperature T3 at the lower part of the heat storage tank 17 and the temperature threshold value. The first temperature threshold value Th1 serving as the temperature threshold value when there is no hot-water supply demand may be lower than the second temperature threshold value Th2 serving as the temperature threshold value when there is a hot-water supply demand. When there is a hot-water supply demand, for example, the heat storage tank 17 provides heat to the medium flowing along the indirect supply line 12. Therefore, when there is a hot-water supply demand, the rate at which the heat medium stored in the heat storage tank 17 surrenders heat increases. In this configuration, the temperature threshold value when there is a hot-water supply demand is higher than the temperature threshold value when there is no hot-water supply demand, so that the travel path of the heat medium in the waste heat recovery line 18 when there is a hot-water supply demand may be switched earlier. Hence, the fuel cell system 11 may maintain the heat medium stored in the heat storage tank 17 at a high temperature regardless of whether or not there is a hot-water supply demand.

In the fuel cell system 11 according to this embodiment, when there is no hot-water supply demand and the temperature T3 at the lower part of the heat storage tank 17 is equal to or lower than the first temperature threshold value Th1, the control device 35 switches the waste heat recovery line 18 such that the heat medium travels along the exhaust-gas heat-exchange line 18b alone. With this configuration, the fuel cell system 11 may heat the heat medium in the exhaust-gas heat-exchange line 18b by using the exhaust gas of the fuel cell 16, while cooling the exhaust gas of the fuel cell 16 to recover condensed water to be supplied to the fuel cell 16. The fuel cell system 11 may stop heating the heat medium in the heat-medium heating line 18d and stop cooling the heat medium in the heat-medium cooling line 18c, so as to reduce energy consumption.

In the fuel cell system 11 according to this embodiment, when there is no hot-water supply demand and the temperature T3 at the lower part of the heat storage tank 17 is higher than the first temperature threshold value Th1, the control device 35 switches the waste heat recovery line such that the heat medium travels sequentially along the heat-medium outflow line 18a, the heat-medium cooling line 18c, and the exhaust-gas heat-exchange line 18b. When the fuel cell 16 is in operation, the condensed water to be supplied to the fuel cell 16 needs to be sufficiently recovered by cooling the exhaust gas of the fuel cell by using the heat medium. When there is no hot-water supply demand and the heat medium stored in the heat storage tank 17 is at a high temperature, there is a possibility that the exhaust gas is not sufficiently cooled by the heat medium. Hence, the fuel cell system 11 needs to actively cool the heat medium. In this configuration, the fuel cell system 11 cools the high-temperature heat medium flowing out from the heat storage tank 17 in the heat-medium cooling line 18c, and subsequently causes the heat medium to flow to the exhaust-gas heat-exchange line 18b. Hence, the low-temperature heat medium cools the exhaust gas of the fuel cell in the exhaust-gas heat-exchange line 18b, so that the fuel cell system 11 may sufficiently recover the condensed water to be supplied to the fuel cell 16.

In the fuel cell system 11 according to this embodiment, when the temperature T3 at the lower part of the heat storage tank 17 is equal to or lower than the third temperature threshold value Th3 and the inflow heat amount is smaller than the provided heat amount, the control device 35 switches the waste heat recovery line 18 such that the heat medium travels along the heat-medium heating line 18d. With this configuration, the fuel cell system 11 may further heat the heat medium in the heat-medium heating line 18d when the heat medium stored in the heat storage tank 17 is at a low temperature and the amount of heat to be supplied to the heat medium is insufficient with only the amount of heat obtained from the fuel cell 16. Hence, the heat medium is sufficiently heated, and the amount of heat provided by the heat storage tank 17 may be ensured.

In the fuel cell system 11 according to this embodiment, when the temperature T3 at the lower part of the heat storage tank 17 is equal to or lower than the fourth temperature threshold value Th4 and the inflow heat amount is larger than the provided heat amount, or when the temperature T3 at the lower part of the heat storage tank 17 is higher than the fourth temperature threshold value Th4 and the inflow heat amount is smaller than the provided heat amount, the control device 35 switches the waste heat recovery line 18 such that the heat medium travels sequentially along the heat-medium outflow line 18a and the exhaust-gas heat-exchange line 18b. With this configuration, when the amount of heat to be supplied to the heat medium is sufficiently recoverable from the amount of heat obtained from the fuel cell 16, the fuel cell system 11 may reduce energy consumption without heating the heat medium in the heat-medium heating line 18d.

In the fuel cell system 11 according to this embodiment, when the water amount W in the condensed water tank is larger than the first water-amount threshold value W1, the control device 35 switches the waste heat recovery line 18 such that the heat medium travels along the exhaust-gas heat-exchange line 18b and subsequently travels along the heat-medium cooling line 18c. With this configuration, the fuel cell system 11 may cool the heat medium without causing the temperature of the heat medium stored in the heat storage tank 17 to become excessively high. The fuel cell system 11 may stop cooling the heat medium in the heat-medium cooling line 18c to reduce energy consumption.

In the fuel cell system 11 according to this embodiment, when the water amount W in the condensed water tank is equal to or smaller than the second water-amount threshold value W2, the control device 35 switches the waste heat recovery line 18 such that the heat medium travels along the heat-medium cooling line 18c and subsequently travels along the exhaust-gas heat-exchange line 18b. The condensed water is supplied to the fuel cell 16 and is used in a steam-reforming reaction. When the water amount W in the condensed water tank is equal to or smaller than the second water-amount threshold value W2, the condensed water is insufficient, possibly having an adverse effect on the fuel cell 16. Hence, the fuel cell system 11 needs to cool the exhaust gas of the fuel cell 16 by using the heat medium and recover the condensed water. When the heat medium is at a high temperature, the fuel cell system 11 needs to cool the heat medium before cooling the exhaust gas. In this configuration, the fuel cell system 11 cools the high-temperature heat medium flowing out from the heat storage tank 17 in the heat-medium cooling line 18c and subsequently causes the heat medium to flow to the exhaust-gas heat-exchange line 18b. Hence, the fuel cell system 11 may sufficiently recover the condensed water to be supplied to the fuel cell 16 by cooling the exhaust gas of the fuel cell 16 by using the low-temperature heat medium in the exhaust-gas heat-exchange line 18b.

In the fuel cell system 11 according to this embodiment, when the temperature T4 at the heat-medium inlet of the third heat exchange unit 20 is equal to or higher than the sixth temperature threshold value Th6 and the water amount in the condensed water tank is equal to or smaller than the third water-amount threshold value, the control device 35 decreases the amount of electricity generated by the fuel cell 16. When the water amount W in the condensed water tank is equal to or smaller than the third water-amount threshold value W3, the condensed water supplied to the fuel cell 16 and used in a steam-reforming reaction may possibly be insufficient. In this case, a large amount of electricity generated by the fuel cell 16 may possibly have an adverse effect on the fuel cell 16. In this configuration, when the water amount W in the condensed water tank is equal to or smaller than the third water-amount threshold value W3, the fuel cell system 11 may decrease the amount of electricity generated by the fuel cell 16, so as to reduce the adverse effect on the fuel cell 16.

In the fuel cell system 11 according to this embodiment, when the fuel cell 16 is stopped and there is no hot-water supply demand and when the temperature T3 at the lower part of the heat storage tank 17 is equal to or lower than the seventh temperature threshold value Th7, the control device 35 switches the waste heat recovery line 18 such that the heat medium travels sequentially along the exhaust-gas heat-exchange line 18b and the heat-medium heating line 18d. With this configuration, when the exhaust gas that is still warm is discharged from the fuel cell even during the stopped state of the fuel cell 16, the fuel cell system 11 may heat the heat medium by using the exhaust gas of the fuel cell. The fuel cell system 11 may further heat the heat medium in the heat-medium heating line 18d. Hence, the fuel cell system 11 may efficiently heat the heat medium. The heated heat medium may be used when there is a hot-water supply demand in the future.

In the fuel cell system 11 according to this embodiment, when the fuel cell 16 is stopped and there is a hot-water supply demand and when the temperature T3 at the lower part of the heat storage tank 17 is equal to or lower than the eighth temperature threshold value Th8, the control device 35 switches the waste heat recovery line 18 such that the heat medium travels along the heat-medium heating line 18d alone. When the heat medium stored in the heat storage tank 17 is at a low temperature and there is a hot-water supply demand, the heat medium needs to be heated quickly to cope with the hot-water supply demand. In this configuration, when the fuel cell 16 is stopped and the heat medium cannot be heated by the exhaust gas of the fuel cell, the fuel cell system 11 causes the heat medium to circulate along the waste heat recovery line 18 without traveling along the exhaust-gas heat-exchange line 18b. Hence, the time period in which the heat medium circulates along the waste heat recovery line 18 may be shortened, and the fuel cell system 11 may cause the heated heat medium to return quickly to the heat storage tank 17.

In the fuel cell system 11 according to this embodiment, when the temperature T3 at the lower part of the heat storage tank 17 is equal to or lower than the ninth temperature threshold value Th9, the control device 35 limits the heat providing capability of the heat storage tank 17. For example, when the amount of heat in the heat medium stored in the heat storage tank 17 is small, the fuel cell system 11 may control the first flow-rate adjustment valve 43 in the indirect supply line 12 to adjust the supply amount of the medium, thereby maintaining the temperature (hot-water temperature) of the medium at the outlet of the indirect supply line 12.

The drawings illustrating the embodiments of the present disclosure are schematic. The dimensional ratio and the like in each drawing do not necessarily match those in reality.

Although the embodiments according to the present disclosure have been described based on the drawings and practical examples, various alternative embodiments and variations are possible for a skilled person based on the present disclosure. Therefore, it is to be noted that these alternative embodiments and variations are included in the scope of the present disclosure. For example, the functions and the like included in the respective components and the like can be rearranged so as not to logically conflict with each other, and a plurality of components and the like may be combined into one or may be divided.

All the configuration requirements described in the present disclosure and/or all the disclosed methods or all the steps may be combined based on a freely-chosen combination except for a combination where these features are exclusive with each other. Each feature described in the present disclosure may be replaced with an alternative feature for achieving the same purpose, an equivalent purpose, or a similar purpose, unless otherwise noted. Therefore, the disclosed features are merely a comprehensive series of identical or uniform features, unless otherwise noted.

The embodiments according to the present disclosure are not limited to any of the specific configurations in the embodiments described above. The embodiments according to the present disclosure can be extended to all the novel features described in the present disclosure or a combination thereof, or to all the novel methods described in the present disclosure, the steps, or a combination thereof.

The terms "first", "second", and the like in the present disclosure are identifiers for differentiating the relevant components from each other. With regard to the components differentiated from each other using the terms "first", "second", and the like in the present disclosure, the numbers of the components are interchangeable. For example, with regard to the first heat exchange unit and the second heat exchange unit, the identifiers "first" and "second" are interchangeable. The identifiers are interchanged with each other at the same time. The components are differentiated from each other even after the identifiers are interchanged. The identifiers may be deleted. Components having the identifiers deleted therefrom are differentiated from each other using reference signs. The identifiers alone, such as "first" and "second", in the present disclosure are not to be used for interpreting the sequence of the components or as grounds for existence of an identifier having a smaller number.

### REFERENCE SIGNS

- 10, 100, 200: cogeneration system
- 11: fuel cell system
- 12: indirect supply line
- 13: indirect supply line
- 14: second heat exchange unit
- 15: fourth heat exchange unit
- 16: fuel cell
- 17: heat storage tank
- 18: waste heat recovery line
- 18a: heat-medium outflow line
- 18b: exhaust-gas heat-exchange line
- 18c: heat-medium cooling line
- 18d: heat-medium heating line
- 18e: second flow path (temperature adjustment line)
- 18f: heat-medium inflow line
- 18g: first flow path
- 19: first heat exchange unit
- 19a: fourth flow path (first bypass flow path)
- 19b: third flow path (second bypass flow path)
- 19c: third bypass flow path
- 20: third heat exchange unit
- 21: heating unit
- 21a, 21b: temperature adjuster
- 22: burner
- 23: gas-liquid separator
- 24: first pump
- 25: pipe line
- 26: reformer
- 27: cell stack
- 28: gasket
- 29: housing
- 30: heat insulator
- 31: first three-way valve
- 32: second three-way valve
- 33: third three-way valve
- 35: control device
- 36: pump
- 37: first indirect supply line
- 38: second indirect supply line
- 39: first medium supply path
- 40: first pump
- 41: second pump
- 42: pump
- 43: first flow-rate adjustment valve
- 44: bypass path
- 45: second flow-rate adjustment valve
- 46: pump
- 47: check valve
- 48: bathtub water-injection valve
- 49: heat radiation unit
- 50: direct supply line
- 51, 52, 53, 54, 55, 56, 57: temperature sensor
- 61,: 62 flow rate sensor
- 64: heat radiation unit
- 65: second medium supply path
- 66: feed path
- 67: return path
- 68: high-temperature feed path
- 69: low-temperature feed path
- 70: three-way valve
- 71: first heat medium line
- 72: second heat medium line

## Claims

1. A cogeneration system comprising:
a fuel cell system having a fuel cell, a first heat exchange unit, a heat storage tank, and a waste heat recovery line, the first heat exchange unit being positioned close to an outer side of the fuel cell or inside thereof and causing a heat medium to recover heat generated at the fuel cell, the heat storage tank storing the heat medium and providing heat in response to a hot-water supply demand, the waste heat recovery line causing the heat medium to circulate between the fuel cell and the heat storage tank; and
an indirect supply line including a second heat exchange unit that supplies heat by causing the heat medium stored in the heat medium tank and a medium to exchange heat with each other.

2. The cogeneration system according to claim 1,
wherein the fuel cell system has a third heat exchange unit that causes exhaust gas of the fuel cell and the heat medium circulating along the waste heat recovery line to exchange heat with each other.

3. The cogeneration system according to claim 2,
wherein the third heat exchange unit is positioned upstream of the first heat exchange unit in the waste heat recovery line.

4. The cogeneration system according to claim 2 or 3,
wherein the fuel cell system has a heat radiation unit between the heat storage tank and the third heat exchange unit in the waste heat recovery line.

5. The cogeneration system according to any one of claims 2 to 4,
wherein the fuel cell system has a temperature adjuster positioned between the first heat exchange unit and the third heat exchange unit in the waste heat recovery line and capable of heating or cooling the heat medium circulating along the waste heat recovery line.

6. The cogeneration system according to claim 5,
wherein the waste heat recovery line includes a first flow path downstream of the third heat exchange unit, the first flow path bypassing the temperature adjuster and connecting to the first heat exchange unit.

7. The cogeneration system according to any one of claims 2 to 6,
wherein the waste heat recovery line includes
a second flow path downstream of the heat storage tank, the second flow path bypassing the third heat exchange unit and connecting to the first heat exchange unit, and
a third flow path downstream of the heat storage tank, the third flow path branching off from the second flow path and connecting to the third heat exchange unit.

8. The cogeneration system according to any one of claims 1 to 7, further comprising:
a direct supply line that supplies heat by causing the heat medium stored in the heat storage tank to flow.

9. The cogeneration system according to any one of claims 2 to 7, further comprising:
a control device,
wherein the waste heat recovery line includes a heat-medium outflow line that causes the heat medium to flow out from the heat storage tank, an exhaust-gas heat-exchange line provided with the third heat exchange unit, a heat-medium cooling line that cools the heat medium, a heat-medium heating line that heats the heat medium, and a heat-medium inflow line capable of causing the heat medium to recover the heat generated at the fuel cell and causing the heat medium to flow into the heat storage tank,
wherein the waste heat recovery line is capable of switching a passage of the heat medium to any one of the exhaust-gas heat-exchange line, the heat-medium cooling line, and the heat-medium heating line between the heat-medium outflow line and the heat-medium inflow line or is capable of changing a sequence in which the heat medium travels along at least two of the exhaust-gas heat-exchange line, the heat-medium cooling line, and the heat-medium heating line, and
wherein the control device switches a travel path of the heat medium in the waste heat recovery line in accordance with an operational state of the fuel cell and whether the hot-water supply demand is present or absent.

10. The fuel cell system according to claim 9,
wherein, when the fuel cell is in operation, the control device switches the travel path of the heat medium in the waste heat recovery line in accordance with a relationship between a temperature at a lower part of the heat storage tank and a temperature threshold value, and a first temperature threshold value serving as the temperature threshold value when the hot-water supply demand is absent is lower than a second temperature threshold value serving as the temperature threshold value when the hot-water supply demand is present.

11. The fuel cell system according to claim 10,
wherein, when the hot-water supply demand is absent and the temperature at the lower part of the heat storage tank is equal to or lower than the first temperature threshold value, the control device switches the waste heat recovery line such that the heat medium travels along the exhaust-gas heat-exchange line alone.

12. The fuel cell system according to claim 10,
wherein, when the hot-water supply demand is absent and the temperature at the lower part of the heat storage tank is higher than the first temperature threshold value, the control device switches the waste heat recovery line such that the heat medium travels sequentially along the heat-medium cooling line and the exhaust-gas heat-exchange line.

13. The fuel cell system according to any one of claims 9 to 12,
wherein, when the fuel cell is in operation and the hot-water supply demand is present, the control device switches the travel path of the heat medium in the waste heat recovery line based on an inflow heat amount and a provided heat amount, the inflow heat amount being an amount of heat of the heat medium flowing into the heat storage tank, the provided heat amount being an amount of heat provided by the heat storage tank in response to the hot-water supply demand.

14. The fuel cell system according to claim 13,
wherein, when a temperature at a lower part of the heat storage tank is equal to or lower than a third temperature threshold value and the inflow heat amount is smaller than the provided heat amount, the control device switches the waste heat recovery line such that the heat medium travels along the heat-medium heating line.

15. The fuel cell system according to claim 13,
wherein, when a temperature at a lower part of the heat storage tank is equal to or lower than a fourth temperature threshold value and the inflow heat amount is larger than the provided heat amount or when the temperature at the lower part of the heat storage tank is higher than the fourth temperature threshold value and the inflow heat amount is smaller than the provided heat amount, the control device switches the waste heat recovery line such that the heat medium travels along the exhaust-gas heat-exchange line alone.

16. The fuel cell system according to claim 15, further comprising:
a condensed water tank storing condensed water occurring at the third heat exchange unit,
wherein, when the temperature at the lower part of the heat storage tank is higher than a fifth temperature threshold value and the inflow heat amount is larger than the provided heat amount, the control device changes the sequence in which the heat medium travels along the exhaust-gas heat-exchange line and the heat-medium cooling line in the waste heat recovery line in accordance with a water amount in the condensed water tank.

17. The cogeneration system according to claim 16,
wherein, when a temperature at an inlet for the heat medium in the third heat exchange unit is equal to or higher than a sixth temperature threshold value and the water amount in the condensed water tank is equal to or smaller than a third water-amount threshold value, the control device reduces an amount of electricity generated by the fuel cell.

18. The cogeneration system according to any one of claims 9 to 17,
wherein, when the fuel cell is stopped and the hot-water supply demand is absent and when a temperature at a lower part of the heat storage tank is equal to or lower than a seventh temperature threshold value, the control device switches the waste heat recovery line such that the heat medium travels sequentially along the exhaust-gas heat-exchange line and the heat-medium heating line.

19. The cogeneration system according to any one of claims 9 to 18,
wherein, when the fuel cell is stopped and the hot-water supply demand is present and when a temperature at a lower part of the heat storage tank is equal to or lower than an eighth temperature threshold value, the control device switches the waste heat recovery line such that the heat medium travels along the heat-medium heating line alone.

20. The cogeneration system according to claim 19,
wherein, when the temperature at the lower part of the heat storage tank is equal to or lower than a ninth temperature threshold value, a heat providing capability of the heat storage tank is limited.
